(19) Europäisches Patentamt
European Patent Office
Office européen des brevets

(11) **EP 4 751 917 A1**

(12) **EUROPEAN PATENT APPLICATION**
published in accordance with Art. 153(4) EPC

(43) Date of publication:
**03.06.2026 Bulletin 2026/23**

(21) Application number: **24845174.2**

(22) Date of filing: **24.05.2024**

(51) International Patent Classification (IPC):
**B41J 2/01** (2006.01)      **B41J 2/205** (2006.01)

(52) Cooperative Patent Classification (CPC):
**B41J 2/01; B41J 2/205**

(86) International application number:
**PCT/JP2024/019150**

(87) International publication number:
**WO 2025/022792 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.07.2023 JP 2023122215**

(71) Applicant: **SCREEN Holdings Co., Ltd.**
**Kyoto-shi, Kyoto 602-8585 (JP)**

(72) Inventors:
• **HATANO, Keiji**
  **Kyoto-shi, Kyoto 602-8585 (JP)**
• **YOKOUCHI, Kenichi**
  **Kyoto-shi, Kyoto 602-8585 (JP)**

(74) Representative: **Kilian Kilian & Partner mbB**
**Zielstattstraße 23a**
**81379 München (DE)**

(54) **COMPENSATION COEFFICIENT DETERMINATION METHOD, PRINTING METHOD, PRINTING DEVICE, AND COMPENSATION COEFFICIENT DETERMINATION PROGRAM**

(57)      Regarding an inkjet printing apparatus, the apparatus makes it possible to suppress the occurrence of defects in a print image more effectively than before in a case where an ejection defect nozzle is present.

Assuming that K is an integer of 2 or more, a region corresponding to a width of each ink ejection head is divided into K comparison regions associated with K different provisional compensation coefficients (S100), and a plurality of tentative defective nozzles is set for each comparison region (S110). K pieces of sample image data are extracted from the captured image of the compensation coefficient calculation chart obtained by performing an ink amount compensation process while applying the K provisional compensation coefficients to the K comparison regions, respectively (S180), and data affected by the ejection defect nozzle is deleted from the K pieces of sample image data (S190). A provisional compensation coefficient to be adopted as a compensation coefficient is determined based on the K pieces of comparison data obtained thereby (S200).

Fig.17

| | |
|---|---|
| | START |
| S100 | REGION DIVISION |
| S110 | SETTING OF TENTATIVE DEFECTIVE NOZZLE |
| S120 | GENERATION OF COMPENSATION COEFFICIENT CALCULATION CHART DATA |
| S130 | PRINTING OF EJECTION DEFECT DETECTION CHART |
| S140 | PRINTING OF COMPENSATION COEFFICIENT CALCULATION CHART |
| S150 | IMAGING OF EJECTION DEFECT DETECTION CHART |
| S160 | IMAGING OF COMPENSATION COEFFICIENT CALCULATION CHART |
| S170 | DETECTION OF EJECTION DEFECT NOZZLE |
| S180 | EXTRACTION OF SAMPLE IMAGE DATA |
| S190 | DELETION OF DATA AFFECTED BY EJECTION DEFECT NOZZLE |
| S200 | DETERMINATION OF COMPENSATION COEFFICIENT TO BE ADOPTED |
| | END |

**EP 4 751 917 A1**

**Description**

TECHNICAL FIELD

The present invention relates to an inkjet printing apparatus, and more particularly to a technique for controlling an ejection amount of ink so as not to cause a defect in a print image even if a nozzle in an ejection defect state (hereinafter, referred to as an "ejection defect nozzle") is present.

BACKGROUND ART

An inkjet printing apparatus that performs printing by ejecting ink onto a print medium such as printing paper is widely known. In the inkjet printing apparatus, when an ejection interval becomes long, drying of the ink due to evaporation of a solvent in the vicinity of a nozzle, mixing of air bubbles into the nozzle, adhesion of dust to the nozzle, and the like may occur during a printing period. That is, ejection defects of the nozzle may occur.

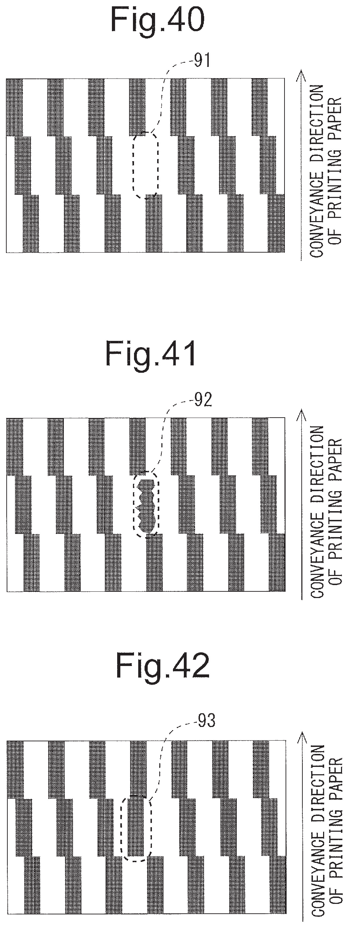

The ejection defects of a nozzle can be roughly classified into three types, which will be described with reference to Figs. 40 to 42. Note that each of Figs. 40 to 42 illustrates a part of a print image obtained by printing a stepwise regular pattern (test pattern), and a black shaded portion is a portion where ink is applied. In a dotted line portion denoted by reference sign 91 in Fig. 40, no ink is applied to a portion where ink is to be applied. Hereinafter, such ejection defects are referred to as "non-ejection". In a dotted line portion denoted by reference sign 92 in Fig. 41, a shape of the portion where the ink is applied is different from the original shape. Hereinafter, such ejection defects are referred to as "shape defects". The shape defects also include ejection defects in a blurred state due to insufficient density and ejection defects in a state in which a portion where ink is applied spreads in a main scanning direction (direction orthogonal to a conveyance direction of the printing paper). In a dotted line portion denoted by reference sign 93 in Fig. 42, ink is applied to a portion shifted in the main scanning direction from the portion where the ink is originally to be applied. Hereinafter, such ejection defects are referred to as "side skipping".

When the ejection defects as described above occur in the inkjet printing apparatus, a defect of the print image such as a white streak or a dot missing occurs. Therefore, conventionally, an operation (cleaning or flushing) for recovering the function of an ejection defect nozzle and an alternative droplet ejection in which ink droplets to be ejected by the ejection defect nozzle are ejected by a peripheral nozzle are performed.

A print head includes a large number of nozzles, and an ejection amount of ink among a plurality of nozzles varies even if the ejection defects as described above do not occur. The variation in the ejection amount of ink causes density unevenness of the print image. Therefore, conventionally, a shading correction process of compensating for such variation in the ejection amount of ink is performed on print data.

Regarding the alternative droplet ejection described above, Japanese Laid-Open Patent Publication No. 2021-160200 discloses a technique of obtaining a distribution ratio (a ratio of distributing a correction value of an ejection defect nozzle to adjacent nozzles on either side) using a dedicated chart (distribution ratio acquisition chart) (see embodiment 2). According to this technique, "0" is intentionally assigned to the gradation value of a nozzle at constant intervals, and a distribution ratio acquisition chart is printed in which the gradation values of the adjacent nozzles on either side of the nozzle (intentional ejection defect nozzle) to which the gradation value "0" is assigned are changed to four different distribution ratios. Then, the distribution ratio depending on the gradation value is determined on the basis of a scanned image of the distribution ratio acquisition chart. At that time, the distribution ratio at which a density becomes the most uniform in a case where a known spatial filter is applied to the scanned image is selected for each gradation value.

PRIOR ART DOCUMENT

PATENT DOCUMENT

[Patent Document 1] Japanese Laid-Open Patent Publication No. 2021-160200

SUMMARY OF THE INVENTION

PROBLEMS TO BE SOLVED BY THE INVENTION

However, according to the technique disclosed in Japanese Laid-Open Patent Publication No. 2021-160200, it is assumed that an ejection defect state is resolved by cleaning in a case where an ejection defect nozzle is present. Therefore, in a case where there is an ejection defect nozzle from which the ejection defect state cannot be resolved by cleaning, the technique disclosed in Japanese Laid-Open Patent Publication No. 2021-160200 cannot be applied. Furthermore, it is conceivable to correct the gradation values at the positions corresponding to the adjacent nozzles on either side of the ejection defect nozzle using a coefficient defined in advance depending on the gradation value at the position corresponding to the ejection defect nozzle, but the suitable coefficient varies depending on the type of printing paper and printing conditions. Therefore, the defects in the print image cannot be effectively suppressed.

Therefore, an object of the present invention is to suppress the occurrence of defects in a print image in a case where an ejection defect nozzle is present more effectively than before, regarding an inkjet printing apparatus.

MEANS FOR SOLVING THE PROBLEMS

A first aspect of the present invention is directed to a compensation coefficient determination method of determining a compensation coefficient to be applied to an ink amount compensation process that compensates for an amount of ink ejected to a print medium when a nozzle in an ejection defect state is present in a printing apparatus including a plurality of nozzles configured to eject ink to the print medium, the compensation coefficient determination method including:

a region division step of dividing a predetermined region into a plurality of divided regions including K comparison regions associated with K provisional compensation coefficients different from each other in a direction orthogonal to a conveyance direction of the print medium, the K being an integer of 2 or more;
a tentative defective nozzle setting step of setting, for each of the K comparison regions, a plurality of tentative defective nozzles that are virtually considered to be in an ejection defect state from among two or more corresponding nozzles;
a compensation coefficient calculation chart data generation step of generating compensation coefficient calculation chart data representing a compensation coefficient calculation chart for determining the compensation coefficient by performing the ink amount compensation process on predetermined image data having a constant density in the direction orthogonal to the conveyance direction of the print medium while applying the K provisional compensation coefficients to the K comparison regions, respectively;
an ejection defect detection chart printing step of printing an ejection defect detection chart for detecting a nozzle in an ejection defect state by ejecting ink from the plurality of nozzles;
a compensation coefficient calculation chart printing step of printing the compensation coefficient calculation chart by ejecting ink from the plurality of nozzles based on the compensation coefficient calculation chart data;
an ejection defect detection chart imaging step of imaging the ejection defect detection chart printed in the ejection defect detection chart printing step;
a compensation coefficient calculation chart imaging step of imaging the compensation coefficient calculation chart printed in the compensation coefficient calculation chart printing step;
an ejection defect nozzle detection step of detecting a nozzle in an ejection defect state based on first imaging data that is imaging data obtained in the ejection defect detection chart imaging step;
a sample image data extraction step of extracting K pieces of sample image data corresponding to the K comparison regions from second imaging data that is imaging data obtained in the compensation coefficient calculation chart imaging step;
a data deletion step of generating K pieces of comparison data by deleting data in a range depending on a position of a true defective nozzle that is a nozzle detected in the ejection defect nozzle detection step from the K pieces of sample image data; and
a coefficient determination step of determining one of the K provisional compensation coefficients as the compensation coefficient based on the K pieces of comparison data.

According to a second aspect of the present invention, in the first aspect of the present invention,

the plurality of divided regions includes a normal region not affected by the tentative defective nozzle in addition to the K comparison regions,
in the sample image data extraction step, normal region data corresponding to the normal region is further extracted from the second imaging data, and
in the coefficient determination step, the compensation coefficient is determined based on the K pieces of comparison data and the normal region data.

According to a third aspect of the present invention, in the second aspect of the present invention,
in the coefficient determination step, an average value for each of the K pieces of comparison data and an average value for the normal region data are obtained, and a provisional compensation coefficient associated with a comparison region corresponding to comparison data from which an average value closest to a target value is obtained among the K pieces of comparison data is determined as the compensation coefficient, the target value being the average value for the normal region data.

According to a fourth aspect of the present invention, in the third aspect of the present invention,

each of the K comparison regions corresponds to N tentative defective nozzles, the N being an integer of 2 or more, each of the K pieces of sample image data includes N pieces of partial image data corresponding to the N tentative defective nozzles, and in the data deletion step, for each of the K pieces of sample image data, partial image data corresponding to a region affected by the true defective nozzle is deleted from the N pieces of partial image data.

According to a fifth aspect of the present invention, in the second aspect of the present invention,

each of the K comparison regions corresponds to N tentative defective nozzles, the N being an integer of 2 or more, in the data deletion step, for each of the K pieces of sample image data, data of P positions affected by the true defective nozzle among positions of the N tentative defective nozzles is deleted, the P being an integer of 1 or more and (N - 1) or less, and in the coefficient determination step, for each of the K pieces of comparison data, a peak average value that is an average value for data of (N - P) positions excluding the data of the P positions deleted in the data deletion step among data of the positions of the N tentative defective nozzles and an average value for the normal region data are obtained, and a provisional compensation coefficient associated with a comparison region corresponding to comparison data from which a peak average value closest to a target value is obtained among the K pieces of comparison data is determined as the compensation coefficient, the target value being the average value for the normal region data.

According to a sixth aspect of the present invention, in the first aspect of the present invention, in the coefficient determination step, a provisional compensation coefficient associated with a comparison region corresponding to comparison data having a minimum difference between a maximum value and a minimum value among the K pieces of comparison data is determined as the compensation coefficient.

According to a seventh aspect of the present invention, in the first aspect of the present invention,

the printing apparatus includes a plurality of print heads each including a part of the plurality of nozzles, the K comparison regions are provided for each of the plurality of print heads, the K provisional compensation coefficients associated with the K comparison regions are common among the plurality of print heads, and in the sample image data extraction step, one piece of sample image data is extracted by extracting, from the second imaging data, data of a plurality of comparison regions associated with a same provisional compensation coefficient among the plurality of print heads.

According to an eighth aspect of the present invention, in the first aspect of the present invention, the compensation coefficient calculation chart includes a plurality of sheets for each color of ink.

According to a ninth aspect of the present invention, in the eighth aspect of the present invention, in the tentative defective nozzle setting step, for each of the K comparison regions, a nozzle different for each of the plurality of sheets is set as a tentative defective nozzle.

According to a tenth aspect of the present invention, in the first aspect of the present invention,

the compensation coefficient calculation chart includes M density regions corresponding to M densities different from each other in the conveyance direction of the print medium, the M being an integer of 2 or more, and in the coefficient determination step, the compensation coefficient is determined for each density.

An eleventh aspect of the present invention is directed to a printing method using a printing apparatus including a plurality of nozzles that ejects ink to a print medium, the printing method including:

a shading data generation step of generating shading data to be used in a shading correction process that compensates for variation in an ejection amount of ink among the plurality of nozzles; a shading data correction step of correcting the shading data by performing the ink amount compensation process on the shading data using a compensation coefficient determined by the compensation coefficient determination method according to any one of claims 1 to 10; a print data generation step of generating print data by performing a rasterization process on submitted data; a shading correction step of correcting the print data by performing the shading correction process on the print data using the shading data corrected in the shading data correction step;

a halftone process step of generating halftone image data by performing a halftone process on the print data corrected in the shading correction step; and
an ink ejection step of ejecting ink from the plurality of nozzles based on the halftone image data.

According to a twelfth aspect of the present invention, in the eleventh aspect of the present invention, a nozzle adjacent to the true defective nozzle is defined as an adjacent nozzle, and when the compensation coefficient is represented by C that is a value of 0 or more and 1 or less, a value of a position corresponding to the true defective nozzle in the shading data before the shading data correction step is executed is represented by Vf, a value of a position corresponding to the adjacent nozzle in the shading data before the shading data correction step is executed is represented by Vn, and a value of a position corresponding to the adjacent nozzle in the shading data after the shading data correction step is executed is represented by V, V is represented by the following formula:

$$V = Vn + Vf \times C.$$

According to a thirteenth aspect of the present invention, in the twelfth aspect of the present invention, a value of a position corresponding to the true defective nozzle in the shading data after the shading data correction step is executed is 0.

A fourteenth aspect of the present invention is directed to a printing apparatus including: a plurality of nozzles configured to eject ink to a print medium; an imaging device configured to capture a print image; and a controller configured to control ejection of ink from the plurality of nozzles and imaging of the print image by the imaging device, and configured to perform, at a time of printing, an ink amount compensation process that compensates for an amount of ink ejected to the print medium when a nozzle in an ejection defect state is present,
wherein the controller executes:

a region division process of dividing a predetermined region into a plurality of divided regions including K comparison regions associated with K provisional compensation coefficients different from each other in a direction orthogonal to a conveyance direction of the print medium, the K being an integer of 2 or more;
a tentative defective nozzle setting process of setting, for each of the K comparison regions, a plurality of tentative defective nozzles that are virtually considered to be in an ejection defect state from among two or more corresponding nozzles;
a compensation coefficient calculation chart data generation process of generating compensation coefficient calculation chart data representing a compensation coefficient calculation chart for determining the compensation coefficient by performing the ink amount compensation process on predetermined image data having a constant density in the direction orthogonal to the conveyance direction of the print medium while applying the K provisional compensation coefficients to the K comparison regions, respectively;
an ejection defect detection chart printing process of controlling ejection of ink from the plurality of nozzles so as to print an ejection defect detection chart for detecting a nozzle in an ejection defect state;
a compensation coefficient calculation chart printing process of controlling ejection of ink from the plurality of nozzles based on the compensation coefficient calculation chart data so as to print the compensation coefficient calculation chart;
an ejection defect detection chart imaging process of causing the imaging device to image the ejection defect detection chart printed in the ejection defect detection chart printing step;
a compensation coefficient calculation chart imaging process of causing the imaging device to image the compensation coefficient calculation chart printed in the compensation coefficient calculation chart printing step;
an ejection defect nozzle detection process of detecting a nozzle in an ejection defect state based on first imaging data that is imaging data obtained in the ejection defect detection chart imaging step;
a sample image data extraction process of extracting K pieces of sample image data corresponding to the K comparison regions from second imaging data that is imaging data obtained in the compensation coefficient calculation chart imaging step;
a data deletion process of generating K pieces of comparison data by deleting data in a range depending on a position of a true defective nozzle that is a nozzle detected in the ejection defect nozzle detection process from the K pieces of sample image data; and
a coefficient determination process of determining one of the K provisional compensation coefficients as the compensation coefficient based on the K pieces of comparison data.

A fifteenth aspect of the present invention is directed to a compensation coefficient determination program that determines a compensation coefficient to be applied to an ink amount compensation process that compensates for an amount of ink ejected to a print medium when a nozzle in an ejection defect state is present in a printing apparatus including

a plurality of nozzles configured to eject ink to the print medium and an imaging device configured to capture a print image, the compensation coefficient determination program causing a computer included in the printing apparatus to execute:

a region division step of dividing a predetermined region into a plurality of divided regions including K comparison regions associated with K provisional compensation coefficients different from each other in a direction orthogonal to a conveyance direction of the print medium, the K being an integer of 2 or more;

a tentative defective nozzle setting step of setting, for each of the K comparison regions, a plurality of tentative defective nozzles that are virtually considered to be in an ejection defect state from among two or more corresponding nozzles;

a compensation coefficient calculation chart data generation step of generating compensation coefficient calculation chart data representing a compensation coefficient calculation chart for determining the compensation coefficient by performing the ink amount compensation process on predetermined image data having a constant density in the direction orthogonal to the conveyance direction of the print medium while applying the K provisional compensation coefficients to the K comparison regions, respectively;

an ejection defect detection chart printing step of controlling ejection of ink from the plurality of nozzles so as to print an ejection defect detection chart for detecting a nozzle in an ejection defect state;

a compensation coefficient calculation chart printing step of controlling ejection of ink from the plurality of nozzles based on the compensation coefficient calculation chart data so as to print the compensation coefficient calculation chart;

an ejection defect detection chart imaging step of causing the imaging device to image the ejection defect detection chart printed in the ejection defect detection chart printing step;

a compensation coefficient calculation chart imaging step of causing the imaging device to image the compensation coefficient calculation chart printed in the compensation coefficient calculation chart printing step;

an ejection defect nozzle detection step of detecting a nozzle in an ejection defect state based on first imaging data that is imaging data obtained in the ejection defect detection chart imaging step;

a sample image data extraction step of extracting K pieces of sample image data corresponding to the K comparison regions from second imaging data that is imaging data obtained in the compensation coefficient calculation chart imaging step;

a data deletion step of generating K pieces of comparison data by deleting data in a range depending on a position of a true defective nozzle that is a nozzle detected in the ejection defect nozzle detection step from the K pieces of sample image data; and

a coefficient determination step of determining one of the K provisional compensation coefficients as the compensation coefficient based on the K pieces of comparison data.

A sixteenth aspect of the present invention is directed to a compensation coefficient method of determining a compensation coefficient to be applied to an ink amount compensation process that compensates for an amount of ink ejected to a print medium when a nozzle in an ejection defect state is present in a printing apparatus including a plurality of nozzles configured to eject ink to the print medium, the compensation coefficient determination method including:

an ejection defect detection chart printing step of printing an ejection defect detection chart for detecting a nozzle in an ejection defect state by ejecting ink from the plurality of nozzles;

a compensation coefficient calculation chart printing step of printing a compensation coefficient calculation chart for determining the compensation coefficient, in a state in which a predetermined region is divided, in a direction orthogonal to a conveyance direction of the print medium, into a plurality of divided regions including K comparison regions associated with K provisional compensation coefficients different from each other, by ejecting ink from the plurality of nozzles based on compensation coefficient calculation chart data obtained by performing the ink amount compensation process on predetermined image data having a constant density in the direction orthogonal to the conveyance direction of the print medium while applying the K provisional compensation coefficients to the K comparison regions, respectively, the K comparison regions each corresponding to a plurality of tentative defective nozzles that are virtually set to an ejection defect state, and the K being an integer of 2 or more;

an ejection defect detection chart imaging step of imaging the ejection defect detection chart printed in the ejection defect detection chart printing step;

a compensation coefficient calculation chart imaging step of imaging the compensation coefficient calculation chart printed in the compensation coefficient calculation chart printing step;

an ejection defect nozzle detection step of detecting a nozzle in an ejection defect state based on first imaging data that is imaging data obtained in the ejection defect detection chart imaging step;

a sample image data extraction step of extracting K pieces of sample image data corresponding to the K comparison regions from second imaging data that is imaging data obtained in the compensation coefficient calculation chart imaging step;

a data deletion step of generating K pieces of comparison data by deleting data in a range depending on a position of a true defective nozzle that is a nozzle detected in the ejection defect nozzle detection step from the K pieces of sample image data; and

a coefficient determination step of determining one of the K provisional compensation coefficients as the compensation coefficient based on the K pieces of comparison data.

A seventeenth aspect of the present invention is directed to a printing apparatus including: a plurality of nozzles configured to eject ink to a print medium; an imaging device configured to capture a print image; and a controller configured to control ejection of ink from the plurality of nozzles and imaging of the print image by the imaging device, and configured to perform, at a time of printing, an ink amount compensation process that compensates for an amount of ink ejected to the print medium when a nozzle in an ejection defect state is present,

wherein the controller executes:

an ejection defect detection chart printing process of controlling ejection of ink from the plurality of nozzles so as to print an ejection defect detection chart for detecting a nozzle in an ejection defect state;

a compensation coefficient calculation chart printing process of controlling ejection of ink from the plurality of nozzles so as to print a compensation coefficient calculation chart for determining a compensation coefficient, in a state in which a predetermined region is divided, in a direction orthogonal to a conveyance direction of the print medium, into a plurality of divided regions including K comparison regions associated with K provisional compensation coefficients different from each other, based on compensation coefficient calculation chart data obtained by performing the ink amount compensation process on predetermined image data having a constant density in the direction orthogonal to the conveyance direction of the print medium while applying the K provisional compensation coefficients to the K comparison regions, respectively, the K comparison regions each corresponding to a plurality of tentative defective nozzles that are virtually set to an ejection defect state, and the K being an integer of 2 or more;

an ejection defect detection chart imaging process of causing the imaging device to image the ejection defect detection chart printed in the ejection defect detection chart printing process;

a compensation coefficient calculation chart imaging process of causing the imaging device to image the compensation coefficient calculation chart printed in the compensation coefficient calculation chart printing process;

an ejection defect nozzle detection process of detecting a nozzle in an ejection defect state based on first imaging data that is imaging data obtained in the ejection defect detection chart imaging process;

a sample image data extraction process of extracting K pieces of sample image data corresponding to the K comparison regions from second imaging data that is imaging data obtained in the compensation coefficient calculation chart imaging process;

a data deletion process of generating K pieces of comparison data by deleting data in a range depending on a position of a true defective nozzle that is a nozzle detected in the ejection defect nozzle detection process from the K pieces of sample image data; and

a coefficient determination process of determining one of the K provisional compensation coefficients as the compensation coefficient based on the K pieces of comparison data.

An eighteenth aspect of the present invention is directed to a compensation coefficient determination program that determines a compensation coefficient to be applied to an ink amount compensation process that compensates for an amount of ink ejected to a print medium when a nozzle in an ejection defect state is present in a printing apparatus including a plurality of nozzles configured to eject ink to the print medium and an imaging device configured to capture a print image, the compensation coefficient determination program causing a computer included in the printing apparatus to execute:

an ejection defect detection chart printing step of controlling ejection of ink from the plurality of nozzles so as to print an ejection defect detection chart for detecting a nozzle in an ejection defect state;

a compensation coefficient calculation chart printing step of controlling ejection of ink from the plurality of nozzles so as to print a compensation coefficient calculation chart for determining the compensation coefficient, in a state in which a predetermined region is divided, in a direction orthogonal to a conveyance direction of the print medium, into a plurality of divided regions including K comparison regions associated with K provisional compensation coefficients different from each other, based on compensation coefficient calculation chart data obtained by performing the ink amount compensation process on predetermined image data having constant density in the direction orthogonal to the conveyance direction of the print medium while applying the K provisional compensation coefficients to the K comparison regions, respectively, the K comparison regions each corresponding to a plurality of tentative defective nozzles that are virtually set to an ejection defect state, and the K being an integer of 2 or more;

an ejection defect detection chart imaging step of causing the imaging device to image the ejection defect detection chart printed in the ejection defect detection chart printing step;

a compensation coefficient calculation chart imaging step of causing the imaging device to image the compensation coefficient calculation chart printed in the compensation coefficient calculation chart printing step;

an ejection defect nozzle detection step of detecting a nozzle in an ejection defect state based on first imaging data that is imaging data obtained in the ejection defect detection chart imaging step;

a sample image data extraction step of extracting K pieces of sample image data corresponding to the K comparison regions from second imaging data that is imaging data obtained in the compensation coefficient calculation chart imaging step;

a data deletion step of generating K pieces of comparison data by deleting data in a range depending on a position of a true defective nozzle that is a nozzle detected in the ejection defect nozzle detection step from the K pieces of sample image data; and

a coefficient determination step of determining one of the K provisional compensation coefficients as the compensation coefficient based on the K pieces of comparison data.

EFFECTS OF THE INVENTION

According to the first aspect of the present invention, the provisional compensation coefficient to be actually applied as the compensation coefficient in the ink amount compensation process is determined from among the plurality of provisional compensation coefficients based on the data obtained by applying the plurality of provisional compensation coefficients to the ink amount compensation process (process of compensating for the amount of ink ejected to the print medium when an ejection defect nozzle is present). Thus, the compensation coefficient is determined based on the data obtained by actually performing the ink amount compensation process. Furthermore, prior to the final determination of the compensation coefficient, the data in the region affected by the ejection defect nozzle is deleted. From the above, since a suitable compensation coefficient is obtained with high accuracy, the occurrence of defects in the print image in a case where the ejection defect nozzle is present is more effectively suppressed than before. Furthermore, since the wasteful consumption of ink and print medium is reduced, it is possible to contribute to the achievement of the SDGs (sustainable development goals).

According to the second aspect of the present invention, it is possible to determine the compensation coefficient in consideration of the density obtained in the region where the ejection defect nozzle is not present.

According to the third aspect of the present invention, even when an ejection defect nozzle is present, it is possible to output a print image having the same density as when an ejection defect nozzle is not present.

According to the fourth aspect of the present invention, the similar effects to those of the third aspect of the present invention can be obtained.

According to the fifth aspect of the present invention, since the final determination of the compensation coefficient is performed based on a relatively small number of data, the process load is reduced.

According to the sixth aspect of the present invention, the compensation coefficient to be actually applied to the ink amount compensation process is determined without comparing the plurality of pieces of comparison data with the data of the normal region.

According to the seventh aspect of the present invention, it is possible to determine the compensation coefficient to be actually applied to the ink amount compensation process so as not to be affected by the variation in characteristics among the plurality of print heads.

According to the eighth aspect of the present invention, the similar effects to those of the first aspect of the present invention can be obtained.

According to the ninth aspect of the present invention, since different nozzles are set as the tentative defective nozzles for each sheet, the influence of the variation in the ejection amount of ink among the plurality of nozzles is more effectively suppressed.

According to the tenth aspect of the present invention, since the compensation coefficient is determined for each of the plurality of densities, the occurrence of defects in the print image is more effectively suppressed than before regardless of the density of the print image in the region corresponding to the ejection defect nozzle.

According to the eleventh aspect of the present invention, since the ink amount compensation process is performed on the shading data, by correcting the print data using the corrected shading data, not only the occurrence of the defects in the print image due to the presence of the ejection defect nozzle but also the occurrence of the density unevenness due to the variation in the ejection amount of the ink among the plurality of nozzles can be suppressed.

According to the twelfth aspect of the present invention, since ink to be ejected from the ejection defect nozzle is ejected from the adjacent nozzle of the ejection defect nozzle, it is possible to more reliably suppress the occurrence of the defects in the print image.

According to the thirteenth aspect of the present invention, the similar effects to those of the twelfth aspect of the present invention can be obtained.

According to the fourteenth aspect of the present invention, the similar effects to those of the first aspect of the present invention can be obtained.

According to the fifteenth aspect of the present invention, the similar effects to those of the first aspect of the present invention can be obtained.

According to the sixteenth aspect of the present invention, the similar effects to those of the first aspect of the present invention can be obtained.

According to the seventeenth aspect of the present invention, the similar effects to those of the first aspect of the present invention can be obtained.

According to the eighteenth aspect of the present invention, the similar effects to those of the first aspect of the present invention can be obtained.

BRIEF DESCRIPTION OF THE DRAWINGS

Fig. 1 is an overall configuration diagram of a printing system according to an embodiment of the present invention.

Fig. 2 is a schematic diagram illustrating one configuration example of an inkjet printing apparatus in the embodiment.

Fig. 3 is a plan view illustrating a configuration example of a recording unit in the embodiment.

Fig. 4 is a diagram for explaining an arrangement of nozzles in an ink ejection head in the embodiment.

Fig. 5 is a block diagram illustrating a hardware configuration of a print control device in the embodiment.

Fig. 6 is a diagram for explaining shading correction process in the embodiment.

Fig. 7 is a diagram for explaining an ink amount compensation process in the embodiment.

Fig. 8 is a flowchart illustrating a procedure of a print output in the printing system according to the embodiment.

Fig. 9 is a flowchart illustrating a detailed procedure of a shading data generation process in the embodiment.

Fig. 10 is a diagram illustrating an example of a shading chart in the embodiment.

Fig. 11 is a block diagram illustrating a functional configuration of a control unit realized by executing a print control program in the print control device in the embodiment.

Fig. 12 is a block diagram illustrating a detailed configuration of a correction coefficient calculation unit in the embodiment.

Fig. 13 is a block diagram illustrating a detailed configuration of the compensation coefficient calculation unit in the embodiment.

Fig. 14 is a diagram for explaining a concept of a method of determining a compensation coefficient in the embodiment.

Fig. 15 is a diagram illustrating an example of a distribution (spatial change) of luminance values obtained by the ink amount compensation process for two comparison regions corresponding to certain two provisional compensation coefficients in the embodiment.

Fig. 16 is a graph illustrating an example of a relationship between a provisional compensation coefficient and an average luminance value in the embodiment.

Fig. 17 is a flowchart illustrating a process procedure for determining a compensation coefficient in the embodiment.

Fig. 18 is a diagram for explaining setting of a tentative defective nozzle in the embodiment.

Fig. 19 is a schematic diagram illustrating an entire compensation coefficient calculation chart according to the embodiment.

Fig. 20 is a schematic diagram illustrating a compensation coefficient calculation chart for one color and one sheet for a region corresponding to one ink ejection head in the embodiment.

Fig. 21 is a schematic diagram illustrating a portion corresponding to one comparison region for one density with respect to the compensation coefficient calculation chart in the embodiment.

Fig. 22 is a diagram for explaining a case where the same nozzle is set as a tentative defective nozzle for all of five sheets in the embodiment.

Fig. 23 is a diagram for explaining a case where different nozzles are set as tentative defective nozzles for each sheet in the embodiment.

Fig. 24 is a schematic diagram illustrating an entire ejection defect detection chart according to the embodiment.

Fig. 25 is a schematic diagram illustrating an ejection defect detection chart for one color in the embodiment.

Fig. 26 is a schematic diagram illustrating a portion corresponding to one ink ejection head 251 and one density in a printed compensation coefficient calculation chart in the embodiment.

Fig. 27 is a diagram illustrating an example of an image represented by first imaging data in a case where an ejection defect nozzle is present in the embodiment.

Fig. 28 is a diagram for explaining sample image data in the embodiment.

Fig. 29 is a diagram for explaining a case where a position of a true defective nozzle is included in a region of one piece of partial image data among four pieces of partial image data in the embodiment.

Fig. 30 is a schematic diagram illustrating an example of comparison data obtained in a case where a position of a true defective nozzle is included in a region of partial image data in the embodiment.

Fig. 31 is a diagram for explaining a case where a position of an ejection defect nozzle is close to a region of partial image data in the embodiment.

Fig. 32 is a diagram for explaining calculation of an average luminance value in a case where a true defective nozzle is not present at all in the embodiment.

Fig. 33 is a diagram for explaining calculation of an average luminance value in a case where a true defective nozzle is present in the embodiment.

Fig. 34 is a diagram for explaining sample image data in a first modification.

Fig. 35 is a diagram for explaining deletion of data from sample image data in a case where a true defective nozzle is present in the first modification.

Fig. 36 is a diagram for explaining deletion of data from sample image data in a case where a true defective nozzle is present in the first modification.

Fig. 37 is a diagram for explaining a concept of a determination method of a compensation coefficient in a second modification.

Fig. 38 is a diagram for explaining a concept of a determination method of a compensation coefficient in a third modification.

Fig. 39 is a flowchart illustrating a process procedure for determining a compensation coefficient in a fourth modification.

Fig. 40 is a diagram for explaining non-ejection.

Fig. 41 is a diagram for explaining shape defects.

Fig. 42 is a diagram for explaining side skipping.

MODE FOR CARRYING OUT THE INVENTION

Hereinafter, an embodiment of the present invention will be described with reference to the accompanying drawings.

<1. Overall configuration of printing system>

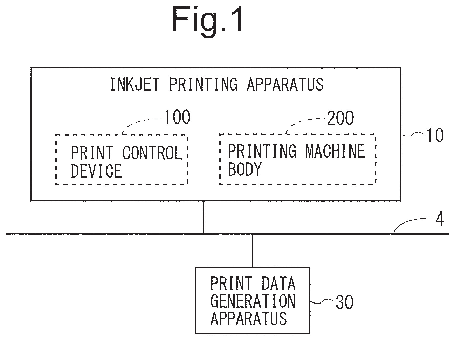

Fig. 1 is an overall configuration diagram of a printing system according to an embodiment of the present invention. The printing system includes an inkjet printing apparatus 10 and a print data generation apparatus 30. The inkjet printing apparatus 10 and the print data generation apparatus 30 are connected to each other by a LAN 4. The print data generation apparatus 30 generates print data by performing a rasterization process or the like on submitted data such as a PDF file. This print data is data not subjected to a halftone process, and the halftone process is performed by a print control device 100 in the inkjet printing apparatus 10 as described later. The print data generated by the print data generation apparatus 30 is transmitted to the inkjet printing apparatus 10 via the LAN 4. The inkjet printing apparatus 10 includes a printing machine body 200 and the print control device 100 that controls an operation of the printing machine body 200. The inkjet printing apparatus 10 outputs a print image on printing paper as a print medium based on print data transmitted from the print data generation apparatus 30 without using a printing plate. Note that the present invention can also be applied to a case where a print medium (for example, a film) other than the printing paper is used.

<2. Configuration of printing machine body of inkjet printing apparatus>

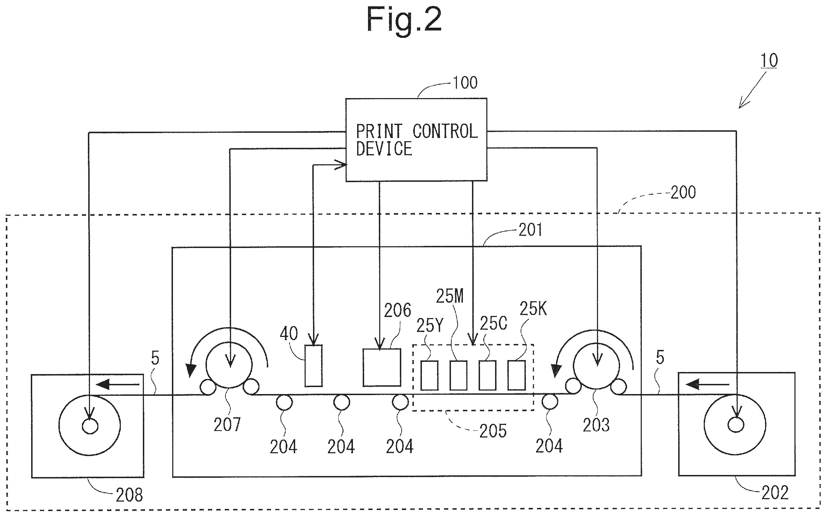

Fig. 2 is a schematic diagram illustrating one configuration example of the inkjet printing apparatus 10. As described above, the inkjet printing apparatus 10 includes the print control device 100 and the printing machine body 200.

The printing machine body 200 includes a paper feeding unit 202 that supplies printing paper (in this example, rolled printing paper) 5 to a printing mechanism 201, the printing mechanism 201 that performs printing on the printing paper 5, and a paper winding unit 208 that winds the printing paper 5 after printing in a roll form.

The printing mechanism 201 includes a first drive roller 203 for conveying the printing paper 5 to the inside, a plurality of support rollers 204 for conveying the printing paper 5 inside the printing mechanism 201, a recording unit 205 that records a print image on the printing paper 5, a drying mechanism 206 that dries the printing paper 5 on which the print image is recorded, and a second drive roller 207 for outputting the printing paper 5 from the inside of the printing mechanism 201. The recording unit 205 includes a K color head unit 25K that ejects K color (black) ink, a C color head unit 25C that ejects C color (cyan) ink, an M color head unit 25M that ejects M color (magenta) ink, and a Y color head unit 25Y that ejects Y color (yellow) ink. Furthermore, the printing mechanism 201 includes an inline scanner 40 as an imaging device that images a print image recorded on the printing paper 5 by the recording unit 205. Imaging data obtained by imaging the print image by the inline scanner 40 is sent to the print control device 100. Note that, in the following description, in a case where the color of the ink ejected from the head unit is not distinguished, the head unit is denoted by reference sign 25.

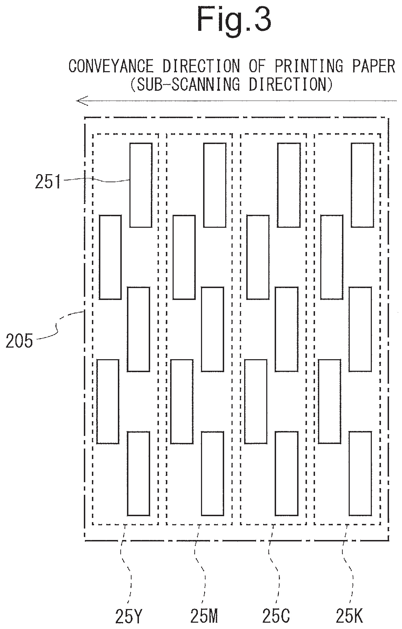

Fig. 3 is a plan view illustrating a configuration example of the recording unit 205. As illustrated in Fig. 3, the recording unit 205 includes the K color head unit 25K, the C color head unit 25C, the M color head unit 25M, and the Y color head unit 25Y arranged in a row in a conveyance direction (sub-scanning direction) of the printing paper 5. Each head unit 25 includes a plurality of ink ejection heads (print heads) 251 arranged in a staggered manner. Each ink ejection head 251 includes a large number of nozzles (not illustrated in Fig. 3) that eject ink. Each nozzle of the ink ejection head 251 included in the K color head unit 25K ejects K color ink, each nozzle of the ink ejection head 251 included in the C color head unit 25C ejects C color ink, each nozzle of the ink ejection head 251 included in the M color head unit 25M ejects M color ink, and each nozzle of the ink ejection head 251 included in the Y color head unit 25Y ejects Y color ink.

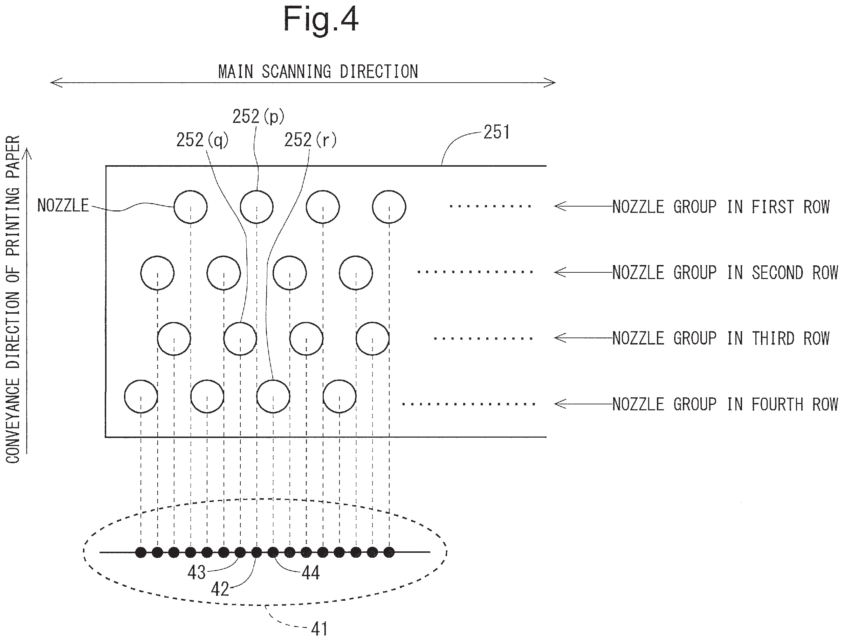

Fig. 4 is a diagram for explaining an arrangement example of nozzles in the ink ejection head 251. Typically, the ink ejection head 251 includes a plurality of rows of nozzle groups each including a plurality of nozzles arranged side by side in a main scanning direction (direction orthogonal to the conveyance direction of the printing paper 5). In the example illustrated in Fig. 4, four rows of nozzle groups are included in the ink ejection head 251. In Fig. 4, a portion denoted by reference sign 41 schematically illustrates landing positions of the ink ejected from each nozzle on the printing paper 5. The plurality of nozzles in the ink ejection head 251 are arranged so that the landing positions of the ink ejected from the nozzles included in the nozzle group in the first row, the landing positions of the ink ejected from the nozzles included in the nozzle group in the second row, the landing positions of the ink ejected from the nozzles included in the nozzle group in the third row, and the landing positions of the ink ejected from the nozzles included in the nozzle group in the fourth row are different positions. For example, the landing position of the ink ejected from each nozzle included in the nozzle group in the first row is a position between the landing position of the ink ejected from the nozzle included in the nozzle group in the third row and the landing position of the ink ejected from the nozzle included in the nozzle group in the fourth row. In the example illustrated in Fig. 4, the landing position 42 of the ink ejected from the nozzle denoted by reference sign 252(p) is a position between the landing position 43 of the ink ejected from the nozzle denoted by reference sign 252(q) and the landing position 44 of the ink ejected from the nozzle denoted by reference sign 252(r). Therefore, adjacent nozzles (nozzles on either side) of the nozzle denoted by reference sign 252(p) are a nozzle denoted by reference sign 252(q) and a nozzle denoted by reference sign 252(r).

<3. Hardware configuration of print control device>

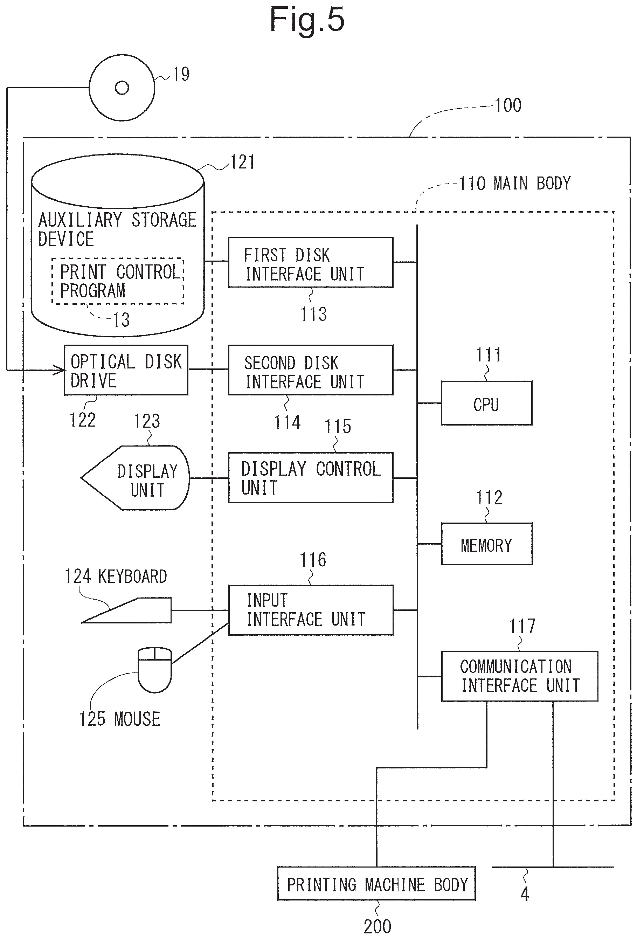

Fig. 5 is a block diagram illustrating a hardware configuration of the print control device 100. As illustrated in Fig. 5, the print control device 100 includes a main body 110, an auxiliary storage device 121, an optical disk drive 122, a display unit 123, a keyboard 124, a mouse 125, and the like. The main body 110 includes a CPU 111, a memory 112, a first disk interface unit 113, a second disk interface unit 114, a display control unit 115, an input interface unit 116, and a communication interface unit 117. The CPU 111, the memory 112, the first disk interface unit 113, the second disk interface unit 114, the display control unit 115, the input interface unit 116, and the communication interface unit 117 are connected to each other via a system bus. The auxiliary storage device 121 is connected to the first disk interface unit 113. The optical disk drive 122 is connected to the second disk interface unit 114. The display unit (display device) 123 is connected to the display control unit 115. The keyboard 124 and the mouse 125 are connected to the input interface unit 116. The printing machine body 200 is connected to the communication interface unit 117 via a communication cable. Furthermore, the communication interface unit 117 is connected to the LAN 4. The auxiliary storage device 121 is a magnetic disk device or the like. An optical disk 19 as a computer-readable recording medium such as a CD-ROM or a DVD-ROM is inserted into the optical disk drive 122. The display unit 123 is a liquid crystal display or the like. The display unit 123 is used to display information desired by an operator. The keyboard 124 and the mouse 125 are used by a worker to input instructions to the print control device 100.

The auxiliary storage device 121 stores a print control program (program for controlling execution of a printing process by the printing machine body 200) 13. The print control program 13 according to the present embodiment includes, as a subprogram, a compensation coefficient determination program that determines a coefficient (hereinafter, it is referred to as a "compensation coefficient") to be applied to an ink amount compensation process that compensates for the amount of ink ejected onto the printing paper 5 when an ejection defect nozzle is present. The CPU 111 implements various functions of the print control device 100 by reading the print control program 13 stored in the auxiliary storage device 121 into the memory 112 and executing the program. The memory 112 includes a random access memory (RAM) and a read only memory (ROM). The memory 112 functions as a work area for the CPU 111 to execute the print control program 13 stored in the auxiliary storage device 121. Note that the print control program 13 is provided by being stored in the computer-readable recording medium (non-transitory recording medium). That is, for example, the user purchases the optical disk 19 as a recording medium of the print control program 13, inserts the optical disk into the optical disk drive 122, reads the print control program 13 from the optical disk 19, and installs the print control program in the auxiliary storage device 121.

<4. Outline of correction process>

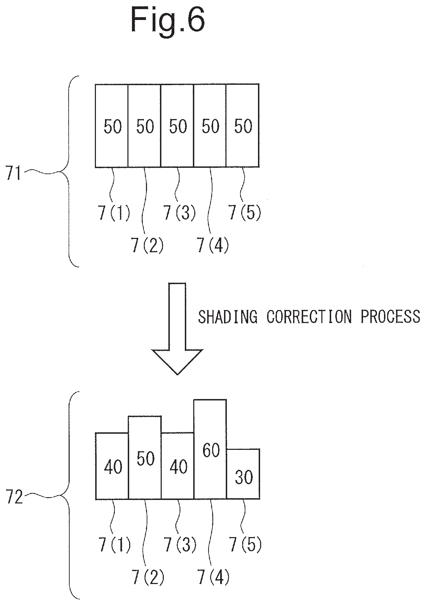

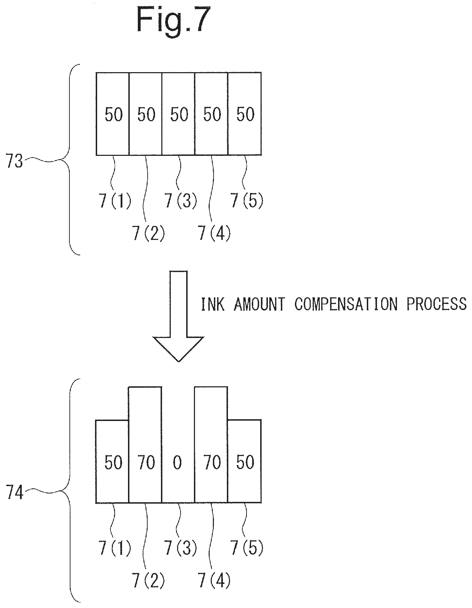

In the inkjet printing apparatus 10 according to the present embodiment, a correction process for suppressing the occurrence of density unevenness due to variations in the ejection amount of ink among a plurality of nozzles and the occurrence of defects (for example, white streaks and dot missing) in a print image due to the presence of ejection defect nozzles is performed. Specifically, as the correction processes, a shading correction process of compensating for variations in the ejection amount of ink among the plurality of nozzles, and an ink amount compensation process of compensating for the amount of ink ejected onto the printing paper 5 when an ejection defect nozzle is present are performed. The ink amount compensation process is a process for realizing the alternative droplet ejection described above. The shading correction process and the ink amount compensation process will be described below with reference to Figs. 6 and 7. Here, attention is paid to five pixel portions 7(1) to 7(5) corresponding to five nozzles. It is assumed that single-color printing is performed in the five pixel portions 7(1) to 7(5) with ink of the same color ejected from the five nozzles. Note that, regarding Figs. 6 and 7, the numerical values inside the rectangles respectively corresponding to the pixel portions 7(1) to 7(5) represent density values in the data.

First, the shading correction process will be described with reference to Fig. 6. Here, it is assumed that when printing of a constant density (50%) is performed without executing the shading correction process, (5/4) times the amount of ink ejected to the pixel portion 7(2) is ejected to the pixel portion 7(1) and the pixel portion 7(3), (5/6) times the amount of ink ejected to the pixel portion 7(2) is ejected to the pixel portion 7(4), and (5/3) times the amount of ink ejected to the pixel portion 7(2) is ejected to the pixel portion 7(5). In this case, density values indicated in a portion denoted by reference sign 71 are corrected to density values indicated in a portion denoted by reference sign 72 by the shading correction process. By correcting the density data in this manner, the variation in the ejection amount of ink among the plurality of nozzles is reduced, and the occurrence of density unevenness is suppressed.

Next, the ink amount compensation process will be described with reference to Fig. 7. Here, it is assumed that a nozzle corresponding to the pixel portion 7(3) is an ejection defect nozzle. In this case, for example, the density values indicated in the portion denoted by reference sign 73 are corrected to the density values indicated in the portion denoted by reference sign 74 by the ink amount compensation process. The density value is corrected from 50 to 0 for the pixel portion 7(3), and the density value is corrected from 50 to 70 for the pixel portion 7(2) and the pixel portion 7(4). By correcting the density data in this manner, a larger amount of ink than originally intended is ejected from each of the adjacent nozzles of the ejection defect nozzle. As a result, the defect of the print image caused by the ink not being normally ejected from the ejection defect nozzle becomes inconspicuous. That is, the occurrence of defects in the print image is suppressed.

<5. Procedure of print output>

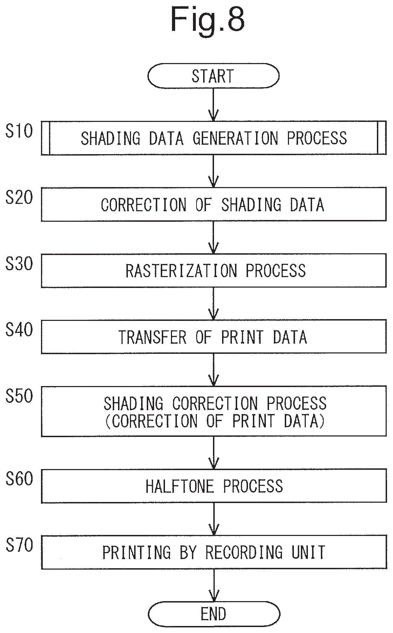

A print output procedure in the printing system will be described with reference to a flowchart illustrated in Fig. 8. Here, it is assumed that the compensation coefficient used for the ink amount compensation process has already been determined.

First, the inkjet printing apparatus 10 performs a process (shading data generation process) of generating shading data, which is data used when the shading correction process is performed on the print data (step S10). Details of the shading data generation process will be described later.

Next, the shading data generated in step S10 is corrected by performing the ink amount compensation process on the shading data using a compensation coefficient determined as described later (step S20). When the compensation coefficient used in the ink amount compensation process is represented by C, which is a value of 0 or more and 1 or less, a value of a position corresponding to an ejection defect nozzle (a true defective nozzle to be described later) in the shading data before the process of step S20 is executed is represented by Vf, a value of a position corresponding to an adjacent nozzle of the ejection defect nozzle in the shading data before the process of step S20 is executed is represented by Vn, and a value of a position corresponding to the adjacent nozzle of the ejection defect nozzle in the shading data after the process of step S20 is executed is represented by V, V is represented by the following Formula (1).

$$V = Vn + Vf \times C \qquad (1)$$

Note that the value of the position corresponding to the ejection defect nozzle in the shading data after the process in step S20 is executed is 0.

As described above, in the present embodiment, the shading data is corrected by the ink amount compensation process. Note that, in step S50 described later, the print data is corrected using the corrected shading data. Therefore, hereinafter, this corrected shading data is also referred to as a "correction coefficient".

After the shading data is corrected, the print data generation apparatus 30 performs the rasterization process on submitted data such as a PDF file to generate print data (step S30). Then, the print data is transferred from the print data generation apparatus 30 to the print control device 100 in the inkjet printing apparatus 10 (step S40).

Thereafter, the print control device 100 performs a shading correction process on the print data using the correction coefficient obtained in step S20 (that is, the shading data after correction in step S20) to correct the print data (step S50).

After the shading correction process is finished, the print control device 100 generates halftone image data by performing a halftone process on the print data after correction in step S50 (step S60).

Finally, printing by the recording unit 205 is performed on the basis of the halftone image data generated in step S60 (step S70). That is, the ejection of ink from a large number of nozzles included in each ink ejection head 251 constituting the recording unit 205 is controlled based on the halftone image data, whereby an image is formed on the printing paper 5.

Note that the processes in steps S10 and S20 are not necessarily executed for each print job. That is, after the processes of steps S10 and S20 are executed once, the processes of steps S30 to S70 can be repeatedly executed for a plurality of print jobs.

In the present embodiment, a shading data generation step is realized by step S10, a shading data correction step is realized by step S20, a print data generation step is realized by step S30, a shading correction step is realized by step S50, a halftone process step is realized by step S60, and an ink ejection step is realized by step S70.

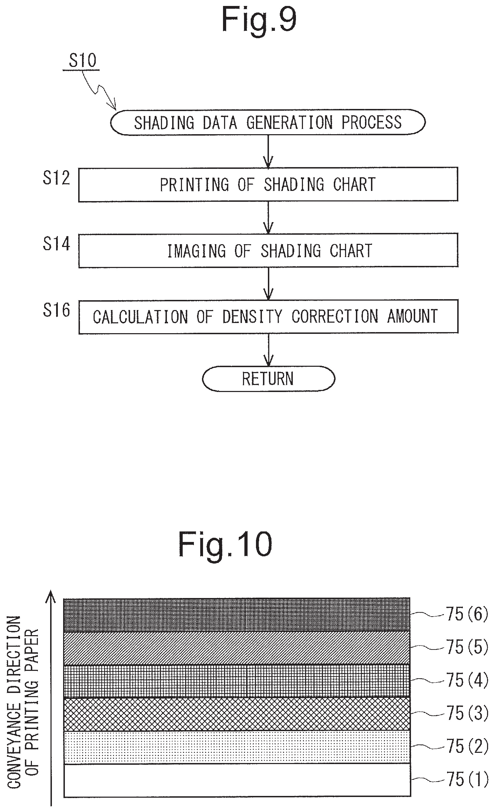

Fig. 9 is a flowchart illustrating a detailed procedure of the shading data generation process (process of step S10 of Fig. 8). After the shading data generation process starts, first, for example, a shading chart as illustrated in Fig. 10 is printed (step S12). Note that the shading chart data representing the shading chart is held in advance in the auxiliary storage device 121 in the print control device 100. The shading chart is an image whose density changes stepwise in the conveyance direction (sub-scanning direction) of the printing paper 5. With respect to the shading chart illustrated in Fig. 10, for example, a density value of a portion denoted by reference sign 75(1) is 5%, a density value of a portion denoted by reference sign 75(2) is 10%, a density value of a portion denoted by reference sign 75(3) is 30%, a density value of a portion denoted by reference sign 75(4) is 50%, a density value of a portion denoted by reference sign 75(5) is 80%, and a density value of a portion denoted by reference sign 75(6) is 100%.

After printing the shading chart, the inline scanner 40 images the shading chart (step S14). Then, a correction amount of the density is calculated by a known method based on the imaging data obtained in step S14 (step S16). Data representing this correction amount of the density is shading data. When the process of step S16 ends, the shading data generation process ends.

<6. Details of correction process>

Details of the correction process will be described below.

<6.1 Functional configuration of control unit>

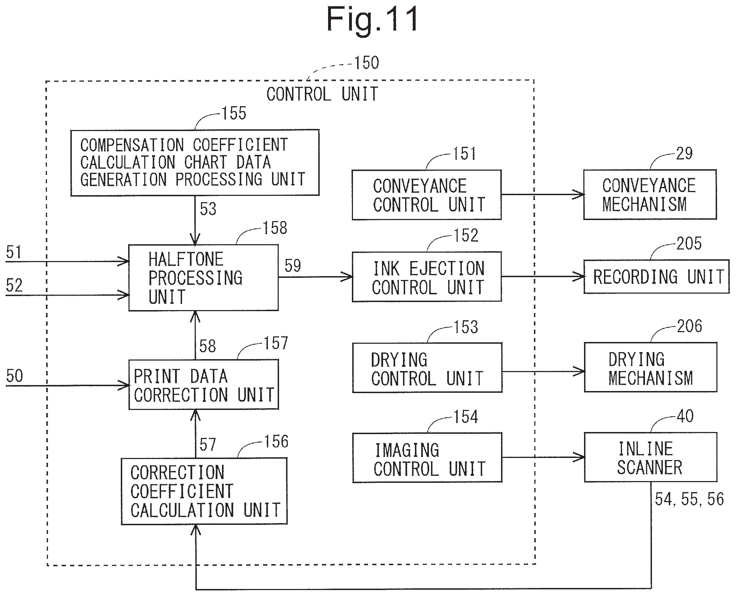

Fig. 11 is a block diagram illustrating a functional configuration of the control unit 150 implemented by the print control device 100 executing the print control program 13. The control unit 150 includes a conveyance control unit 151, an ink ejection control unit 152, a drying control unit 153, an imaging control unit 154, a compensation coefficient calculation chart data generation processing unit 155, a correction coefficient calculation unit 156, a print data correction unit 157, and a halftone processing unit 158.

The conveyance control unit 151 controls the speed (conveyance speed) at which the conveyance mechanism 29 conveys the printing paper 5. Note that the conveyance mechanism 29 is realized by the paper feeding unit 202, the first drive roller 203, the plurality of support rollers 204, the second drive roller 207, and the paper winding unit 208 (refer to Fig. 2). The drying control unit 153 controls a temperature (drying temperature) when the drying mechanism 206 dries the printing paper 5 after printing. The imaging control unit 154 controls the imaging timing of the print image by the inline scanner 40.

The compensation coefficient calculation chart data generation processing unit 155 generates compensation coefficient calculation chart data 53 representing a compensation coefficient calculation chart for determining a compensation coefficient to be used in the ink amount compensation process. Note that the generation of the compensation coefficient calculation chart data 53 will be described in detail later.

The correction coefficient calculation unit 156 calculates a correction coefficient 57 for correcting print data 50 generated by the print data generation apparatus 30 based on first imaging data 54 obtained by the inline scanner 40 imaging an ejection defect detection chart for detecting an ejection defect nozzle, second imaging data 55 obtained by the inline scanner 40 imaging a compensation coefficient calculation chart, and third imaging data 56 obtained by the inline scanner 40 imaging a shading chart as illustrated in Fig. 10. Note that details of the correction coefficient calculation unit 156 will be described later.

The print data correction unit 157 corrects the print data 50 generated by the print data generation apparatus 30 using the correction coefficient 57 calculated by the correction coefficient calculation unit 156. In other words, the print data correction unit 157 performs the shading correction process on the print data 50 generated by the print data generation apparatus 30 using the correction coefficient 57 calculated by the correction coefficient calculation unit 156. The print data correction unit 157 outputs corrected print data 58.

The halftone processing unit 158 generates halftone image data 59 including information indicating a dot size of ink corresponding to each pixel by performing a halftone process on data to be printed. As the dot sizes of the ink, for example, three-stage sizes (L size, M size, S size) are prepared. In the present embodiment, the halftone process is performed on the print data 58 corrected by the print data correction unit 157, shading chart data 51 representing the shading chart, ejection defect detection chart data 52 representing the ejection defect detection chart, and the compensation coefficient calculation chart data 53 generated by the compensation coefficient calculation chart data generation processing unit 155. Note that a specific method of the halftone process is not particularly limited, and for example, a known method such as an error diffusion method or a dither method can be adopted.

The ink ejection control unit 152 controls the amount of ink ejected from each nozzle included in each ink ejection head 251 constituting the recording unit 205 based on the halftone image data 59 generated by the halftone processing unit 158.

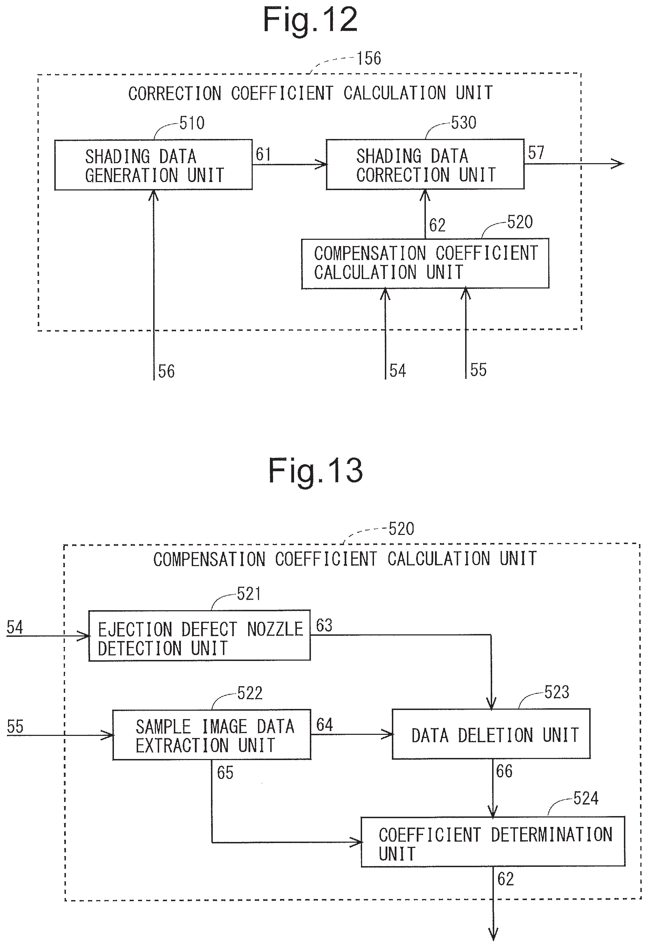

Fig. 12 is a block diagram illustrating a detailed configuration of the correction coefficient calculation unit 156. The correction coefficient calculation unit 156 includes a shading data generation unit 510, a compensation coefficient calculation unit 520, and a shading data correction unit 530.

The shading data generation unit 510 generates shading data (data representing the correction amount of the density) 61 on the basis of the third imaging data 56 obtained by the inline scanner 40 imaging the shading chart as illustrated in Fig. 10.

The compensation coefficient calculation unit 520 obtains a compensation coefficient 62 used for the ink amount compensation process based on the first imaging data 54 obtained by the inline scanner 40 imaging the ejection defect detection chart and the second imaging data 55 obtained by the inline scanner 40 imaging the compensation coefficient calculation chart. Note that details of the compensation coefficient calculation unit 520 will be described later.

The shading data correction unit 530 performs the ink amount compensation process on the shading data 61 generated by the shading data generation unit 510 using the compensation coefficient 62 obtained by the compensation coefficient calculation unit 520. As a result, the correction coefficient 57 for correcting the print data 50 is obtained.

Fig. 13 is a block diagram illustrating a detailed configuration of the compensation coefficient calculation unit 520. The compensation coefficient calculation unit 520 includes an ejection defect nozzle detection unit 521, a sample image data extraction unit 522, a data deletion unit 523, and a coefficient determination unit 524.

The ejection defect nozzle detection unit 521 detects an ejection defect nozzle 63 based on the first imaging data 54. A specific method of detecting the ejection defect nozzle 63 is not particularly limited, but for example, the ejection defect nozzle 63 can be detected by a method using machine learning.

The sample image data extraction unit 522 extracts, from the second imaging data 55, a plurality of pieces of sample image data 64 corresponding to a plurality of comparison regions set for determining the compensation coefficient 62 to be applied to the ink amount compensation process. The sample image data extraction unit 522 further extracts normal region data 65 corresponding to the normal region from the second imaging data 55. Note that the comparison region and the normal region will be described later.

The data deletion unit 523 deletes data in a range depending on the position of the nozzle (ejection defect nozzle) 63 detected by the ejection defect nozzle detection unit 521 from the plurality of sample image data 64, thereby generating a plurality of pieces of comparison data 66 corresponding to the plurality of sample image data 64. Note that the plurality of pieces of comparison data 66 are associated with a plurality of provisional compensation coefficients prepared for convenience in order to determine the compensation coefficient 62 to be actually applied to the ink amount compensation process.

The coefficient determination unit 524 determines one of the plurality of provisional compensation coefficients as the compensation coefficient 62 to be actually applied to the ink amount compensation process based on the comparison result between each of the plurality of pieces of comparison data 66 and the normal region data 65. Note that the determination of the compensation coefficient 62 will be described in detail later.

<6.2 Method of determining compensation coefficient>

<6.2.1 Concept>

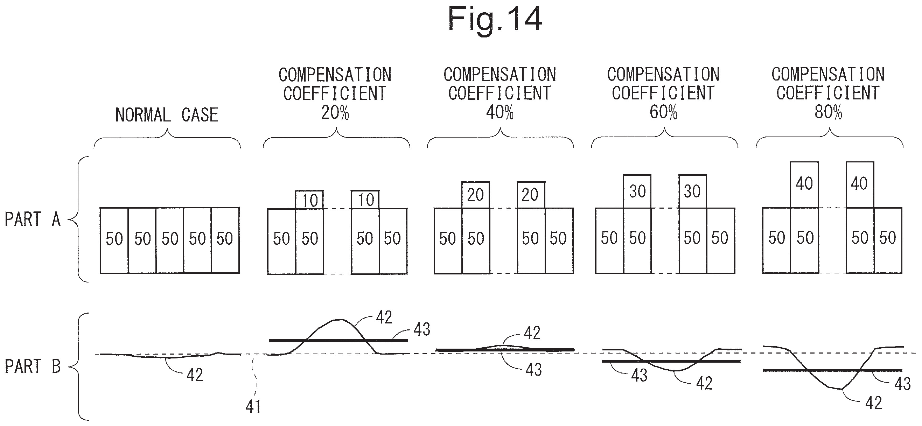

A way of determining the compensation coefficient 62 will be described with reference to Figs. 14 to 16. The compensation coefficient 62 is a coefficient used in the ink amount compensation process. As described above, in the ink amount compensation process, data of the density of the pixel portion corresponding to the ejection defect nozzle and the pixel portions corresponding to the adjacent nozzles of the ejection defect nozzle (nozzles on both sides of the ejection defect nozzle) is corrected (see Fig. 7). At this time, a value obtained by multiplying the original density value of the pixel portion corresponding to the ejection defect nozzle by the compensation coefficient 62 is added to the original density value of the pixel portion of each of the adjacent nozzles of the ejection defect nozzle. Note that the suitable compensation coefficient 62 varies depending on the type of printing paper 5 and printing conditions.

Part A of Fig. 14 schematically illustrates density values for 5 pixels of a normal case in which an ejection defect nozzle is not present and density values for 5 pixels of each of four cases in which the ink amount compensation process is performed using four kinds of compensation coefficients when an ejection defect nozzle is present. Furthermore, in Part B of Fig. 14, the target luminance value is indicated by a dotted line denoted by reference sign 41, the distribution (spatial change) of the luminance values in the five pixel portions for each case is indicated by a solid line denoted by reference sign 42, and the average value of the luminance values (that is, average luminance value) for each case other than the normal case is indicated by a thick solid line denoted by reference sign 43. For example, in the case of the "compensation coefficient 20%", since the amount of ink ejected to the relevant region is small, the average luminance value in the relevant region is higher than the target luminance value. Furthermore, for example, in the case of the "compensation coefficient 60%", the amount of ink ejected to the relevant region is large, and thus the average luminance value in the relevant region is lower than the target luminance value. In the example illustrated in Fig. 14, in the case of the "compensation coefficient 40%", the average luminance value in the relevant region is close to the target luminance value.

In the present embodiment, various compensation coefficients are prepared as provisional compensation coefficients, and the provisional compensation coefficient from which the average luminance value closest to that in the normal case (case where there is no ejection defect nozzle) is obtained in a case where the ink amount compensation process is performed using the provisional compensation coefficients is adopted as the compensation coefficient 62 to be applied to the ink amount compensation process when printing based on an actual print job is performed.

More specifically, in the present embodiment, 21 provisional compensation coefficients (0%, 5%, 10%, 15%, 20%, 25%, 30%, 35%, 40%, 45%, 50%, 55%, 60%, 65%, 70%, 75%, 80%, 85%, 90%, 95%, 100%) are prepared. Furthermore, for each ink ejection head 251, a region in the main scanning direction is divided into 21 comparison regions corresponding to the 21 provisional compensation coefficients and a normal region corresponding to the normal case. Moreover, for each of the 21 comparison regions, four tentative defective nozzles that are virtually considered to be in the ejection defect state are set from among a plurality of corresponding nozzles. Then, on the basis of the second imaging data 55 obtained by imaging the compensation coefficient calculation chart including an image corresponding to the 21 comparison regions and the normal regions, the compensation coefficient 62 to be actually applied to the ink amount compensation process is determined from the 21 provisional compensation coefficients.

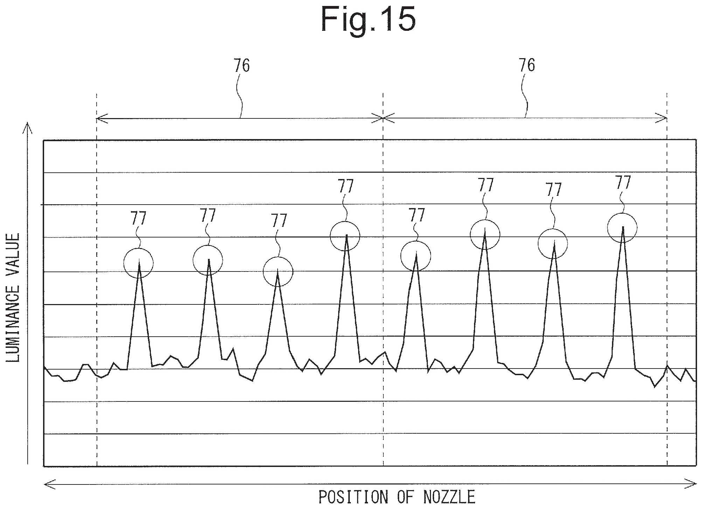

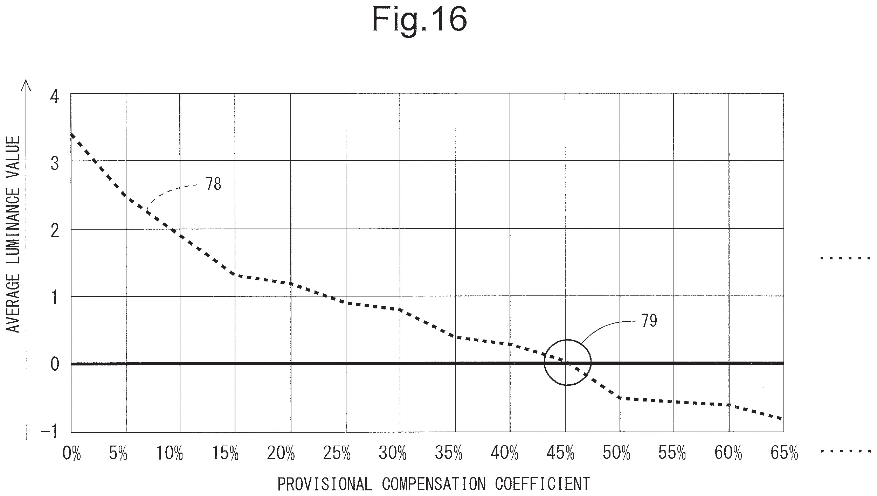

Fig. 15 illustrates an example of the distribution (spatial change) of the luminance value obtained by the ink amount compensation process for two comparison regions 76 corresponding to certain two provisional compensation coefficients. The position of each portion denoted by reference sign 77 corresponds to the position of the tentative defective nozzle. On the basis of such a distribution of luminance values, an average luminance value is obtained for each comparison region. Fig. 16 is a graph illustrating an example of a relationship between the provisional compensation coefficient and the average luminance value. Note that the average luminance value in the normal region is set to 0. In Fig. 16, the relationship between the provisional compensation coefficient and the average luminance value is indicated by a thick dotted line denoted by reference sign 78. As the provisional compensation coefficient is smaller, the amount of ink ejected to the corresponding region is smaller, and thus the average luminance value is higher. As the provisional compensation coefficient is larger, the amount of ink ejected to the corresponding region is larger, and thus the average luminance value is lower. From a portion denoted by reference sign 79 in Fig. 16, it is understood that, in this example, an average luminance value closest to the average luminance value in the normal region is obtained when the provisional compensation coefficient is 45%. Therefore, in this example, the compensation coefficient 62 to be actually applied to the ink amount compensation process is determined to be 45%.

<6.2.2 Process procedure for determination of compensation coefficient>

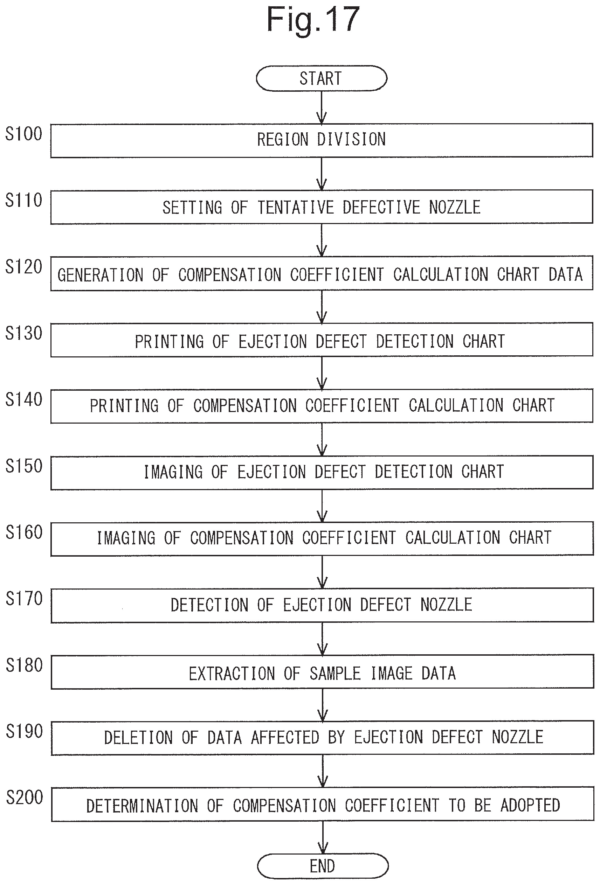

A procedure of a process of determining the compensation coefficient 62 will be described with reference to a flowchart illustrated in Fig. 17. First, for each ink ejection head 251, a region in the main scanning direction (direction orthogonal to the conveyance direction of the printing paper 5) is divided into 21 comparison regions associated with the 21 provisional compensation coefficients different from each other and one normal region (step S100). In the present embodiment, 21 comparison regions and one normal region correspond to a plurality of divided regions. Note that the number of provisional compensation coefficients to be prepared is not limited to 21. Furthermore, the normal region may not necessarily be provided for each ink ejection head 251. That is, assuming that K is an integer of 2 or more, the region corresponding to the width of the ink ejection head 251 in the main scanning direction may be divided into a plurality of divided regions including K comparison regions associated with K provisional compensation coefficients different from each other.

By the way, in a case where five ink ejection heads 251 are provided for one ink color, a region corresponding to each of the five ink ejection heads 251 is divided into 21 comparison regions and one normal region. Furthermore, as will be described later, the compensation coefficient calculation chart includes images for five sheets in the sub-scanning direction for each color. From the above, the comparison region corresponding to each provisional compensation coefficient exists at 25 (= 5 × 5) locations. In this regard, the comparison regions for the 25 locations corresponding to the same provisional compensation coefficient are treated as one comparison region. However, for convenience of description, in the following description, attention is paid to one comparison region among 25 comparison regions corresponding to one provisional compensation coefficient.

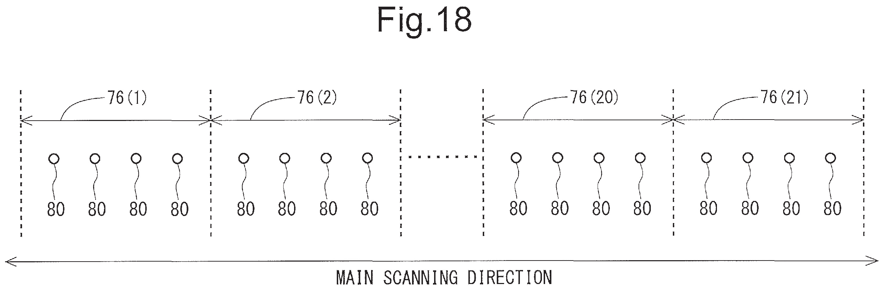

After completion of step S100, for each of the 21 comparison regions, a plurality of tentative defective nozzles that are virtually considered to be in the ejection defect state are set from among a plurality of corresponding nozzles (step S110). Note that, as described above, in the present embodiment, four tentative defective nozzles are set for each comparison region. That is, for each ink ejection head 251, as schematically illustrated in Fig. 18, four tentative defective nozzles 80 are set for each of the 21 comparison regions 76(1) to 76(21).

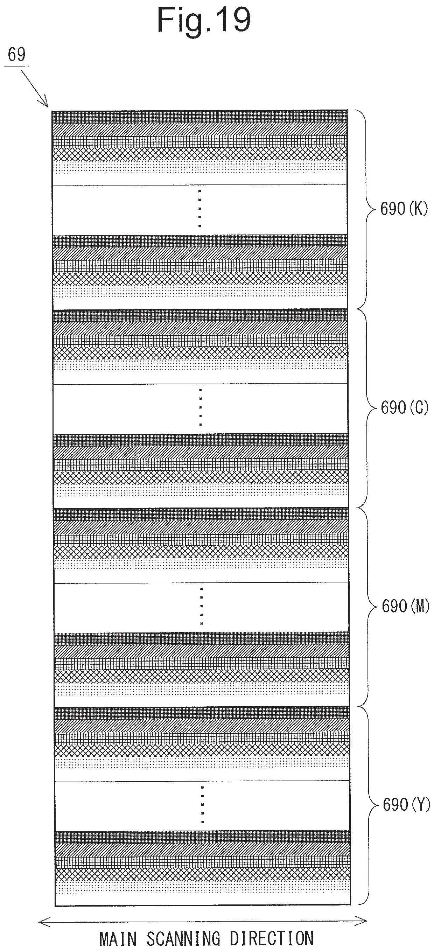

Next, the compensation coefficient calculation chart data 53 representing a compensation coefficient calculation chart for determining the compensation coefficient 62 is generated (step S120). Fig. 19 is a schematic diagram illustrating an entire compensation coefficient calculation chart 69. As illustrated in Fig. 19, the compensation coefficient calculation chart 69 includes a portion 690(K) corresponding to K color, a portion 690(C) corresponding to C color, a portion 690(M) corresponding to M color, and a portion 690(Y) corresponding to Y color. However, in the following description, attention is paid to one color. The portion corresponding to each color includes images for a plurality of sheets. In this regard, in the present embodiment, an image of five sheets is included in a portion corresponding to each color.

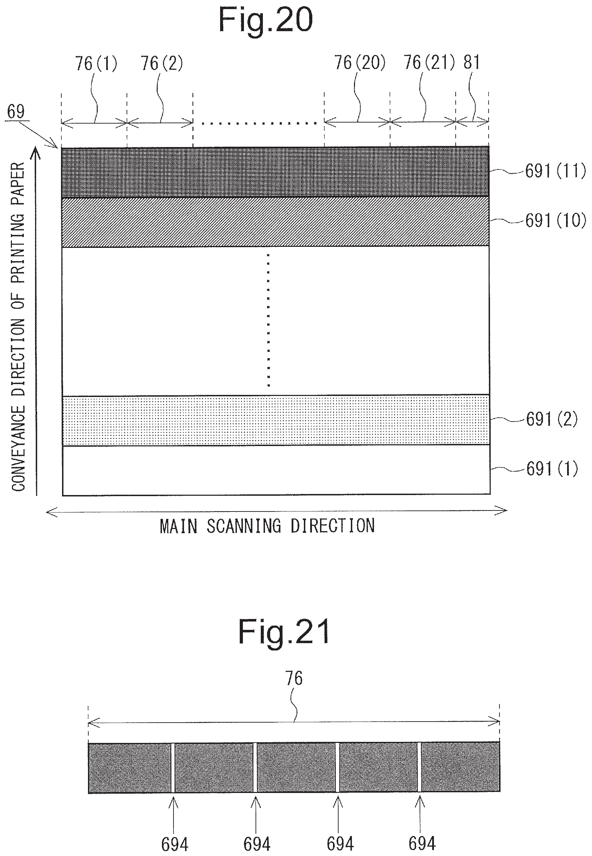

Fig. 20 is a schematic diagram illustrating the compensation coefficient calculation chart 69 for one color and one sheet for a region corresponding to one ink ejection head 251. The compensation coefficient calculation chart 69 is an image in which the density changes stepwise in the conveyance direction (sub-scanning direction) of the printing paper 5. In this regard, in the present embodiment, it is assumed that the density changes in 11 stages. Specifically, in Fig. 20, the density of a portion denoted by reference sign 691(1) is 5%, the density of a portion denoted by reference sign 691(2) is 10%, the density of a portion denoted by reference sign 691(10) is 90%, and the density of a portion denoted by reference sign 691(11) is 100%. The density changes in increments of 10% between the portion denoted by reference sign 691(2) and the portion denoted by reference sign 691(10). Furthermore, as illustrated in Fig. 20, the compensation coefficient calculation chart 69 includes portions respectively corresponding to the 21 comparison regions 76(1) to 76(21) and a portion corresponding to a normal region 81. As illustrated in Fig. 21, a portion corresponding to one comparison region 76 for one density includes portions 694 corresponding to four tentative defective nozzles. Note that the change in the density in the compensation coefficient calculation chart 69 is not limited to 11 stages. Assuming that M is an integer of 2 or more, the compensation coefficient calculation chart 69 may include M density regions corresponding to M densities different from each other in the conveyance direction of the printing paper 5.

In step S120, the compensation coefficient calculation chart data 53 representing the compensation coefficient calculation chart 69 as described above is generated by performing the ink amount compensation process on the image data having a constant density in the main scanning direction while applying the 21 provisional compensation coefficients to the 21 comparison regions 76(1) to 76(21), respectively.

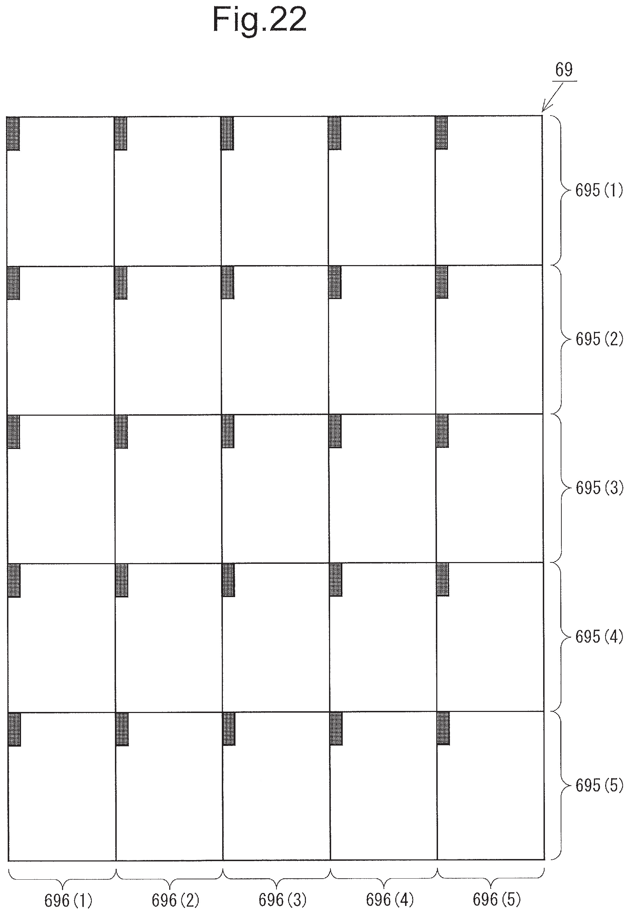

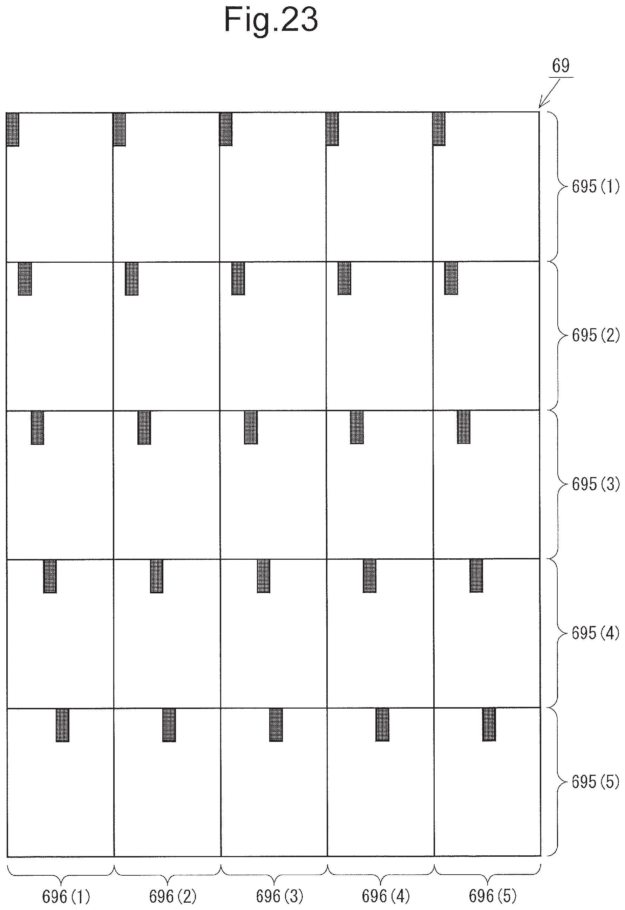

Regarding each combination of the ink ejection head 251 and the density, the same nozzle may be set as the tentative defective nozzle for all of the five sheets, or different nozzles may be set as the tentative defective nozzles for each sheet. In a case where the same nozzle is set as a tentative defective nozzle for all of the five sheets, when shading is applied to a region (comparison region) corresponding to a certain provisional compensation coefficient for the maximum density among the entire region of the compensation coefficient calculation chart 69, a state as illustrated in Fig. 22 is obtained. On the other hand, in a case where different nozzles are set as the tentative defective nozzles for each sheet, when shading is applied to a region (comparison region) corresponding to a certain provisional compensation coefficient for the maximum density among the entire region of the compensation coefficient calculation chart 69, a state as illustrated in Fig. 23 is obtained. Note that, in Figs. 22 and 23, regions denoted by reference signs 695(1) to 695(5) represent regions corresponding to the 1st to 5th sheets, respectively, and regions denoted by reference signs 696(1) to 696(5) represent regions corresponding to the 1st to 5th ink ejection heads 251, respectively. In a case where different nozzles are set as the tentative defective nozzles for each sheet (see Fig. 23), the influence of the variation in the ejection amount of ink among the plurality of nozzles can be more effectively suppressed.

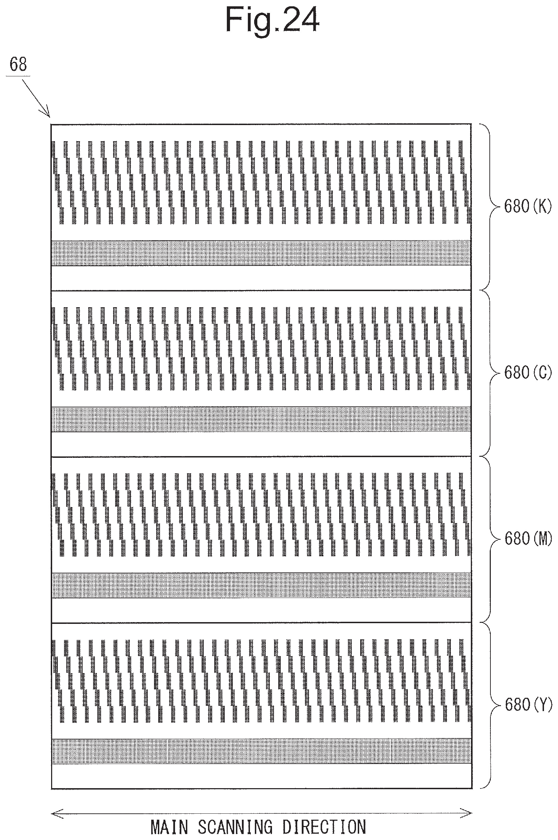

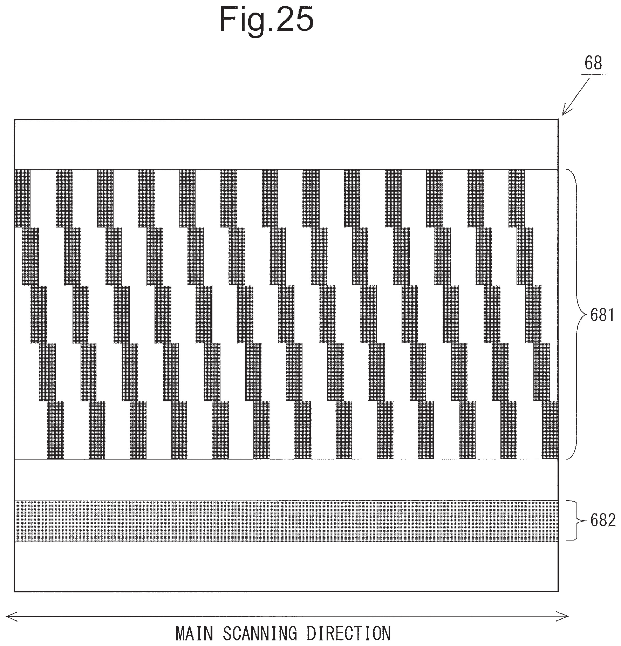

After the compensation coefficient calculation chart data 53 is generated, an ejection defect detection chart for detecting an ejection defect nozzle is printed (step S130). Fig. 24 is a schematic diagram illustrating an entire ejection defect detection chart 68. As illustrated in Fig. 24, the ejection defect detection chart 68 includes a portion 680(K) corresponding to the K color, a portion 680(C) corresponding to the C color, a portion 680(M) corresponding to the M color, and a portion 680(Y) corresponding to the Y color. Fig. 25 is a schematic diagram illustrating the ejection defect detection chart 68 for one color. The ejection defect detection chart 68 includes a portion 681 representing a stepwise pattern to be formed by ejecting ink from all the nozzles in one head unit 25 and a portion 682 representing a tint pattern having a constant density as a whole to be formed by ejecting ink from all the nozzles in one head unit 25. In step S130, the ejection defect detection chart 68 as described above is printed by controlling the ejection of ink from each nozzle included in each ink ejection head 251 constituting the recording unit 205 based on the ejection defect detection chart data 52. Note that the ejection defect detection chart data 52 is held in advance in the auxiliary storage device 121 in the print control device 100.

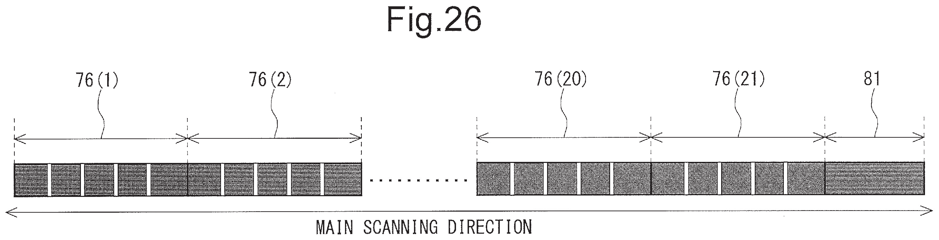

After the ejection defect detection chart 68 is printed, the ejection of ink from each nozzle included in each ink ejection head 251 constituting the recording unit 205 is controlled on the basis of the compensation coefficient calculation chart data 53 generated in step S120, whereby the compensation coefficient calculation chart 69 is printed (step S140). The portion corresponding to one ink ejection head 251 and one density in the compensation coefficient calculation chart 69 printed in step S140 is, for example, as illustrated in Fig. 26. The image of the portion illustrated in Fig. 26 includes images corresponding to the 21 comparison regions 76(1) to 76(21) and an image corresponding to the normal region 81.

After the compensation coefficient calculation chart 69 is printed, the ejection defect detection chart 68 printed on the printing paper 5 in step S130 is imaged by the inline scanner 40 (step S150), and further, the compensation coefficient calculation chart 69 printed on the printing paper 5 in step S140 is imaged by the inline scanner 40 (step S160). In step S150, the first imaging data 54 is obtained, and in step S160, the second imaging data 55 is obtained.

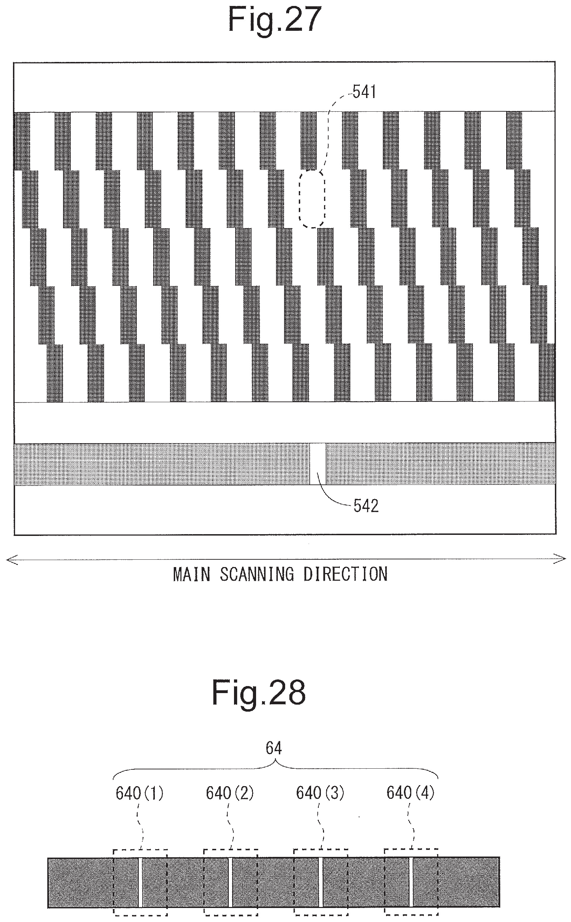

Thereafter, the ejection defect nozzle detection unit 521 detects an ejection defect nozzle in which non-ejection, shape defects, side skipping, and the like occur, based on the first imaging data 54 obtained in step S150 (step S170). By the way, if an ejection defect nozzle is not present, the image represented by the first imaging data 54 is an image as illustrated in Fig. 25. On the other hand, in a case where an ejection defect nozzle is present, the image represented by the first imaging data 54 is, for example, an image as illustrated in Fig. 27. In the example illustrated in Fig. 27, the linear pattern is not normally printed in the portion denoted by reference sign 541 (that is, non-ejection occurs). Furthermore, the tint pattern is not normally printed in the portion denoted by reference sign 542 corresponding to the ejection defect in the portion denoted by reference sign 541. As above, in a case where an ejection defect nozzle is present, a tint pattern is not normally printed in a portion corresponding to the ejection defect nozzle. Thus, in step S170, an ejection defect nozzle is detected based on the first imaging data 54. Note that hereinafter, the ejection defect nozzle detected in step S170 is referred to as a "true defective nozzle".

Next, the sample image data extraction unit 522 extracts, for each ink color, 21 pieces of sample image data 64 corresponding to the 21 comparison regions 76 set for determining the compensation coefficient 62 from the second imaging data 55 obtained in step S160 (step S180). Furthermore, in the present embodiment, in step S180, the sample image data extraction unit 522 further extracts, for each ink color, the normal region data 65 corresponding to the normal region 81 from the second imaging data 55.

In the present embodiment, as illustrated in Fig. 28, each of the 21 pieces of sample image data 64 includes four pieces of partial image data 640(1) to 640(4) corresponding to the four tentative defective nozzles 80 (see Fig. 19).

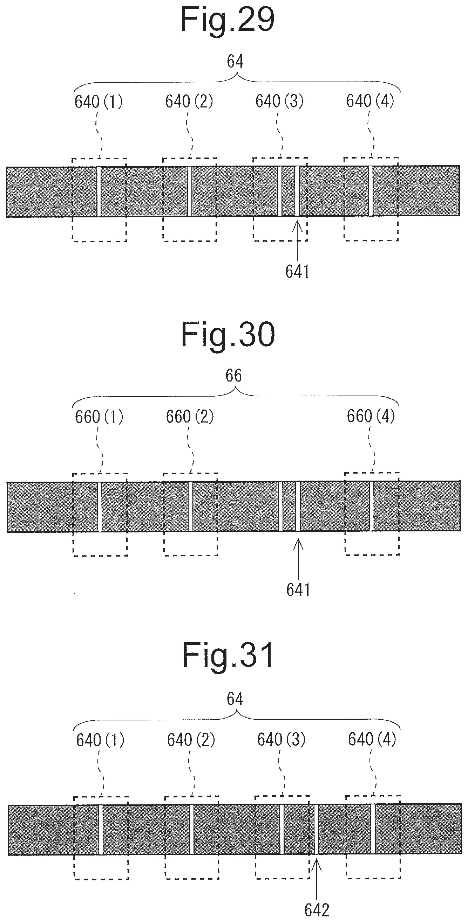

After completion of step S180, the data deletion unit 523 deletes data in a range depending on the position of the true defective nozzle (the ejection defect nozzle detected in step S170) from the 21 pieces of sample image data 64, thereby generating 21 pieces of comparison data 66 (step S190). In this regard, in the present embodiment, for example, in a case where the position 641 of the true defective nozzle is included in the region of the partial image data 640(3) among the four pieces of partial image data 640(1) to 640(4) constituting one piece of sample image data 64 as illustrated in Fig. 29, data obtained by deleting the partial image data 640(3) from the four pieces of partial image data 640(1) to 640(4) is set as the comparison data 66. Therefore, in this example, as illustrated in Fig. 30, the comparison data 66 includes partial image data 660(1) corresponding to the partial image data 640(1), partial image data 660(2) corresponding to the partial image data 640(2), and partial image data 660(4) corresponding to the partial image data 640(4).

Note that, even in a case where the position of the ejection defect nozzle is not included in the region of the partial image data constituting the sample image data 64, when the presence of the ejection defect nozzle affects the average value of the partial image data, the corresponding partial image data is deleted at the time of generating the comparison data 66. For example, in a case where the position 642 of the ejection defect nozzle is not included in the region of the partial image data 640(3) but is close to the region of the partial image data 640(3) as illustrated in Fig. 31, the presence of the ejection defect nozzle affects the average value of the partial image data 640(3). Therefore, also in such a case, data obtained by deleting the partial image data 640(3) from the four pieces of partial image data 640(1) to 640(4) is set as the comparison data 66.

As described above, in the present embodiment, in step S190, for each of the 21 pieces of sample image data 64, the partial image data corresponding to the region affected by the true defective nozzle is deleted from the four pieces of partial image data 640(1) to 640(4).

After completion of step S190, the coefficient determination unit 524 determines one of the 21 provisional compensation coefficients as the compensation coefficient 62 to be actually applied to the ink amount compensation process based on the 21 pieces of comparison data 66 and the normal region data 65 (step S200). Note that the compensation coefficient 62 is determined for each density (in the present embodiment, for each of 11 levels of density) of the image constituting the compensation coefficient calculation chart 69. The compensation coefficient 62 corresponding to the density between the density of a certain stage and the density of a stage adjacent thereto can be obtained using, for example, linear interpolation. For example, the compensation coefficient 62 for a density of 62% is determined by linear interpolation using a compensation coefficient 62 for a density of 60% and a compensation coefficient 62 for a density of 70%.

In step S200, first, an average value for each of the 21 pieces of comparison data 66 and an average value for the normal region data 65 are obtained. Note that the comparison data 66 and the normal region data 65 are data of luminance values. Therefore, the average luminance value for each of the 21 pieces of comparison data 66 and the average luminance value for the normal region data 65 are obtained.

Here, a method of obtaining the average luminance value for each piece of comparison data 66 will be described. Note that here, for convenience of description, attention is paid to only the region corresponding to one ink ejection head 251 and one sheet of the compensation coefficient calculation chart data 53. Furthermore, the average value of each partial image data constituting the comparison data 66 (average luminance value in the region of each partial image data) is referred to as a "partial average value".

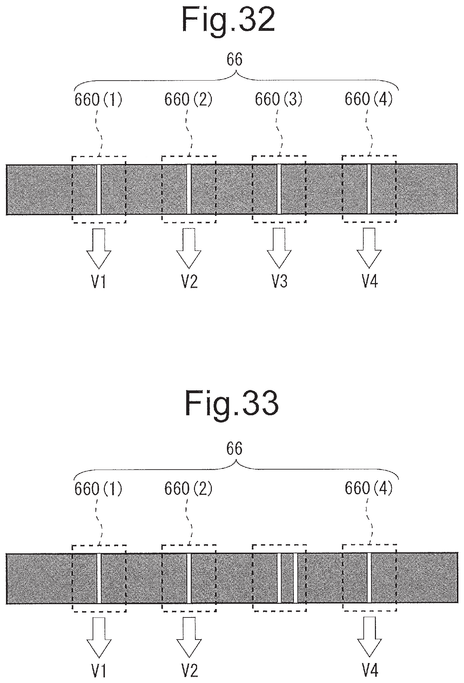

In a case where there is no true defective nozzle at all, as illustrated in Fig. 32, the comparison data 66 includes four pieces of partial image data 660(1) to 660(4). When the partial average values of the partial image data 660(1) to 660(4) are represented by V1 to V4, respectively, the average luminance value Vave of the comparison data is calculated by the following Formula (2).

$$Vave = (V1 + V2 + V3 + V4)/4 \qquad (2)$$

In a case where a true defective nozzle is present at a position that affects the average luminance value of the partial image data 640(3) as illustrated in Figs. 29 and 31, the comparison data 66 includes three pieces of partial image data 660(1), 660(2), and 660(4) as illustrated in Fig. 33. When the partial average values of the partial image data 660(1), 660(2), and 660(4) are represented by V1, V2, and V4, respectively, the average luminance value Vave of the comparison data is calculated by the following Formula (3).

$$Vave = (V1 + V2 + V4)/3 \qquad (3)$$

In the above-described manner, the average luminance value is calculated for each of the 21 pieces of comparison data 66. Then, using the average luminance value of the normal region data 65 as a target value, the target value is compared with the average luminance value of each of the 21 pieces of comparison data 66. As a result, the provisional compensation coefficient associated with the comparison region 76 corresponding to the comparison data from which the average luminance value closest to the target value is obtained among the 21 pieces of comparison data 66 is determined as the compensation coefficient 62 to be actually applied to the ink amount compensation process.

Note that, in the present embodiment, a region division step is realized by step S100, a tentative defective nozzle setting step is realized by step S110, a compensation coefficient calculation chart data generation step is realized by step S120, an ejection defect detection chart printing step is realized by step S130, a compensation coefficient calculation chart printing step is realized by step S140, an ejection defect detection chart imaging step is realized by step S150, a compensation coefficient calculation chart imaging step is realized by step S160, an ejection defect nozzle detection step is realized by step S170, a sample image data extraction step is realized by step S180, a data deletion step is realized by step S190, and a coefficient determination step is realized by step S200.

<7. Effects>

According to the present embodiment, 21 provisional compensation coefficients are prepared as various compensation coefficients, and a provisional compensation coefficient to be actually applied as the compensation coefficient 62 in the ink amount compensation process is determined from among the 21 provisional compensation coefficients based on data obtained by using the 21 provisional compensation coefficients in the ink amount compensation process. In this manner, the compensation coefficient 62 is determined based on the data obtained by actually performing the ink amount compensation process. Furthermore, prior to the final determination of the compensation coefficient 62, the data in the region affected by the ejection defect nozzle is deleted. From the above, since the suitable compensation coefficient 62 is obtained with high accuracy, the occurrence of the defects in the print image in a case where the ejection defect nozzle is present is more effectively suppressed than before with respect to the inkjet printing apparatus 10. Furthermore, since the wasteful consumption of ink and printing paper 5 is reduced, it is possible to contribute to the achievement of SDGs (sustainable development goals).

<8. Modifications>

Hereinafter, modifications of the above embodiment will be described.

<8.1 First modification>

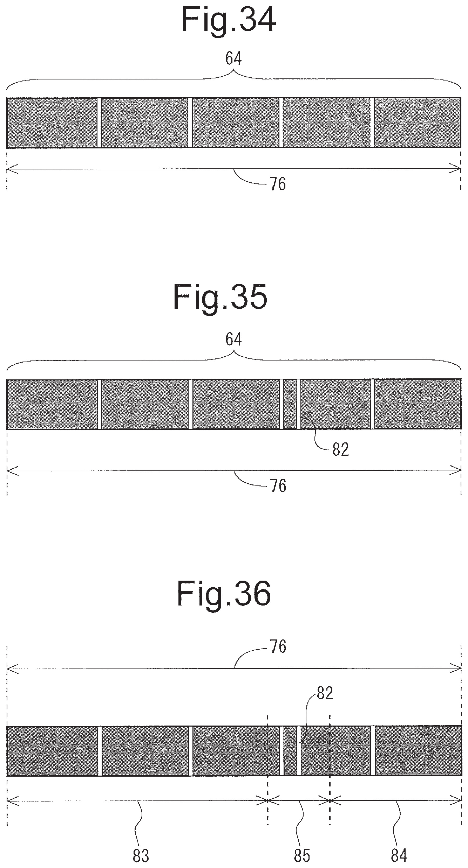

In the above embodiment, each sample image data 64 includes four pieces of partial image data 640(1) to 640(4) (see Fig. 28), and the partial image data 640 affected by the ejection defect nozzle is deleted when the comparison data 66 is generated. On the other hand, in the present modification, as illustrated in Fig. 34, data of the entire comparison region 76 is set as sample image data 64. Hereinafter, the procedure of the process of determining the compensation coefficient 62 will be described with respect to points different from the above embodiment.

In step S180 of Fig. 17, as illustrated in Fig. 34, data of the entire comparison region 76 is extracted as sample image data 64. In step S190 of Fig. 17, data in a predetermined range is deleted from each sample image data 64 based on the position of the true defective nozzle. In this regard, in a case where the position denoted by reference sign 82 in Fig. 35 corresponds to the position of the true defective nozzle, for example, data in a range represented by an arrow denoted by reference sign 85 in Fig. 36 is deleted from the sample image data 64. As a result, data in a range represented by an arrow denoted by reference sign 83 in Fig. 36 and data in a range represented by an arrow denoted by reference sign 84 in Fig. 36 constitute comparison data 66. Then, in the example illustrated in Fig. 36, in step S200 of Fig. 17, the average luminance value is calculated based on the data of the range represented by the arrow denoted by reference sign 83 in Fig. 36 and the range represented by the arrow denoted by reference sign 84 in Fig. 36.

As above, each piece of sample image data 64 may not include the plurality of pieces of partial image data 640.

<8.2 Second modification>

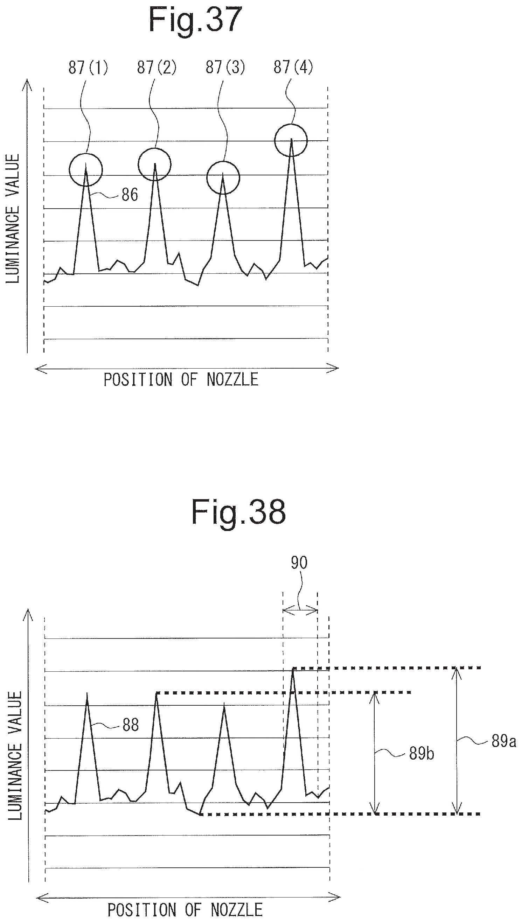

A determination method of the compensation coefficient 62 in the second modification of the above embodiment will be described with reference to Fig. 37. Regarding the above-described comparison data 66, it is considered that as the corresponding provisional compensation coefficient is a more suitable value, the data value (luminance value) corresponding to the position of the tentative defective nozzle becomes a value closer to the average value (average luminance value) for the above-described normal region data 65. Therefore, in the present modification, an average value of data values corresponding to the position of the tentative defective nozzle (hereinafter, it is referred to as a "peak average value") is obtained for each of the 21 pieces of comparison data 66. Furthermore, before the peak average value is obtained, in step S190 of Fig. 17, the data of the position affected by the true defective nozzle among the positions of the four tentative defective nozzles corresponding to each comparison region 76 is deleted.

From the above, for example, in a case where the data value distribution (spatial change) for the second imaging data 55 corresponding to a certain comparison region 76 is as indicated by a solid line denoted by reference sign 86 in Fig. 37, there is no true defective nozzle, and the four positions denoted by reference signs 87(1) to 87(4) are positions corresponding to the four tentative defective nozzles, the average value of the data values at the four positions denoted by reference signs 87(1) to 87(4) is obtained as the peak average value for the comparison data 66 corresponding to the certain comparison region 76. Furthermore, in a case where the data value distribution for the second imaging data 55 corresponding to a certain comparison region 76 is as indicated by a solid line denoted by reference sign 86 in Fig. 37, there is a true defective nozzle, and the true defective nozzle affects the data value at the position denoted by reference sign 87(1), the average value of the data values at three positions denoted by reference signs 87(2) to 87(4) is obtained as the peak average value for the comparison data 66 corresponding to the certain comparison region 76.

After the peak average value is obtained for each of the 21 pieces of comparison data 66 as above-described manner, the provisional compensation coefficient corresponding to the comparison data 66 from which the peak average value closest to the average value for the normal region data 65 is obtained is determined as the compensation coefficient 62 to be actually applied to the ink amount compensation process.

As above, in the present modification, in step S190 of Fig. 17, assuming that P is an integer of 1 or more and 3 or less, for each of the 21 pieces of sample image data, the data of the P positions affected by the true defective nozzle among the positions of the four tentative defective nozzles is deleted. As a result, 21 pieces of comparison data 66 are generated. Then, in step S200 of Fig. 17, for each of the 21 pieces of comparison data 66, a peak average value, which is an average value for the data of (4 - P) positions excluding the data of the P positions deleted in step S190 among the data of the positions of the four tentative defective nozzles, and an average value for the normal region data 65 are obtained, and with the average value for the normal region data 65 as a target value, a provisional compensation coefficient associated with the comparison region 76 corresponding to the comparison data 66 for which a peak average value closest to the target value is obtained among the 21 pieces of comparison data 66 is determined as the compensation coefficient 62 actually applied to the ink amount compensation process.

<8.3 Third modification>

A determination method of the compensation coefficient 62 in the third modification of the above embodiment will be described with reference to Fig. 38. Regarding the above-described comparison data 66, it is considered that the more suitable the corresponding provisional compensation coefficient is, the smaller the variation in the data value (luminance value) becomes. Therefore, in the present modification, the difference between the maximum value of the data value (luminance value) and the minimum value thereof is obtained for each of the 21 pieces of comparison data 66. Furthermore, before the difference between the maximum value of the data values and the minimum value thereof is obtained, the data in the predetermined range is deleted on a basis of the position of the true defective nozzle in step S190 of Fig. 17.

For example, in a case where the data value distribution (spatial change) for the second imaging data 55 corresponding to a certain comparison region 76 is as indicated by a solid line denoted by reference sign 88 in Fig. 38 and there is no true defective nozzle, the difference between the maximum value of the data value and the minimum value thereof for the comparison data 66 corresponding to the certain comparison region 76 is represented by the length of an arrow denoted by reference sign 89a in Fig. 38. Furthermore, in a case where the data value distribution for the second imaging data 55 corresponding to a certain comparison region 76 is as indicated by a solid line denoted by reference sign 88 in Fig. 38, there is a true defective nozzle, and the data in the range of the arrow denoted by reference sign 90 is deleted in step S190 of Fig. 17, the difference between the maximum value of the data value and the minimum value thereof for the comparison data 66 corresponding to the certain comparison region 76 is represented by the length of the arrow denoted by reference sign 89b in Fig. 38.

After the difference between the maximum value of the data values and the minimum value thereof is obtained for each of the 21 pieces of comparison data 66, a provisional compensation coefficient corresponding to the comparison data 66 for which the minimum difference has been obtained is determined as the compensation coefficient 62 to be actually applied to the ink amount compensation process.

As above, in the present modification, in step S190 of Fig. 17, data in a predetermined range is deleted on a basis of the position of the true defective nozzle. As a result, 21 pieces of comparison data 66 are generated. Then, in step S200 of Fig. 17, the provisional compensation coefficient associated with the comparison region 76 corresponding to the comparison data 66 having the minimum difference between the maximum value and the minimum value among the 21 pieces of comparison data 66 is determined as the compensation coefficient 62 to be actually applied to the ink amount compensation process.

<8.4 Fourth modification>

In the above embodiment, regarding the series of processes (see Fig. 17) for determining the compensation coefficient 62, it is assumed that all of the processes from the process of dividing the region corresponding to the width of the ink ejection head 251 into a plurality of divided regions to the process of finally determining the compensation coefficient 62 are performed in one printing system (that is, the processes are performed by the user of the inkjet printing apparatus 10). However, the present invention is not limited thereto. It is also possible to adopt an operation in which the processes up to the generation of the compensation coefficient calculation chart data 53 (that is, the processes up to step S120 of Fig. 17) are performed by the manufacturer of the inkjet printing apparatus 10, and the processes after the process of printing the ejection defect detection chart 68 (the processes after step S130 of Fig. 17) are performed by the user of the inkjet printing apparatus 10.

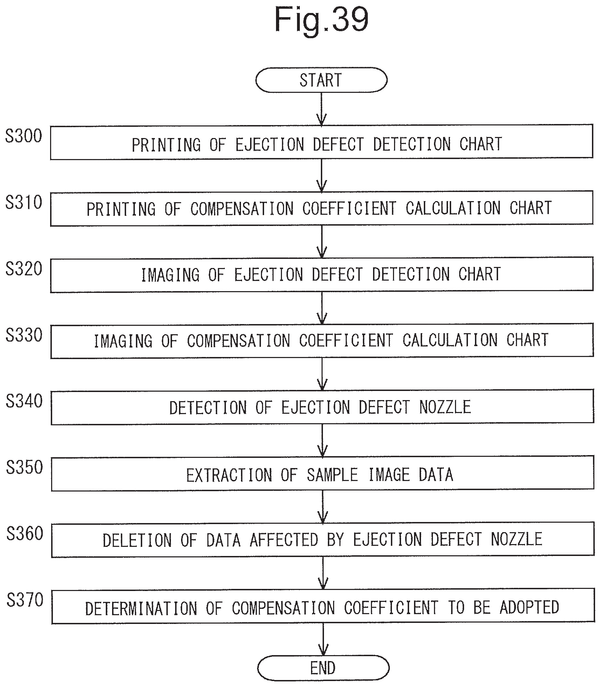

Fig. 39 is a flowchart illustrating a procedure of a process of determining the compensation coefficient 62 in the present modification. First, the ejection defect detection chart 68 is printed (step S300). Next, the ejection of ink from each nozzle included in each ink ejection head 251 constituting the recording unit 205 is controlled based on the compensation coefficient calculation chart data 53, whereby the compensation coefficient calculation chart 69 is printed (step S310). In this regard, in the present modification, unlike the above embodiment, the compensation coefficient calculation chart data 53 representing the compensation coefficient calculation chart 69 is held in advance in the auxiliary storage device 121 in the print control device 100. The compensation coefficient calculation chart data 53 is generated by the manufacturer of the inkjet printing apparatus 10 performing the processes of steps S100 to S120 of Fig. 17. That is, in the manufacturer of the inkjet printing apparatus 10, the compensation coefficient calculation chart data 53 is generated by dividing the region in the main scanning direction (direction orthogonal to the conveyance direction of the printing paper 5) for the ink ejection head 251 into 21 comparison regions 76 (each comparison region 76 corresponds to the plurality of tentative defective nozzles 80) associated with 21 provisional compensation coefficients different from each other and one normal region 81, and performing the ink amount compensation process on predetermined image data having a constant density in the main scanning direction while applying the 21 provisional compensation coefficients to the 21 comparison regions 76, respectively. After the generation of the compensation coefficient calculation chart data 53, processes similar to the processes of steps S150 to S200 of Fig. 17 (processes of steps S320 to S370 of Fig. 39) are performed.

Note that, in the present embodiment, the ejection defect detection chart printing step is realized by step S300, the compensation coefficient calculation chart printing step is realized by step S310, the ejection defect detection chart imaging step is realized by step S320, the compensation coefficient calculation chart imaging step is realized by step S330, the ejection defect nozzle detection step is realized by step S340, the sample image data extraction step is realized by step S350, the data deletion step is realized by step S360, and the coefficient determination step is realized by step S370.

<9. Supplement>

Note that, in the above embodiment, the influence of the ejection defect is alleviated by correcting the density values of nozzles on both sides of a nozzle in the ejection defect state (for example, in a case where the nozzle denoted by reference sign 252(p) in Fig. 4 is a nozzle in the ejection defect state, the density values of the nozzles denoted by reference signs 252(q) and 252(r) in Fig. 4 are corrected). However, the nozzle the density value of which is corrected may be a nozzle in the vicinity of the nozzle in the ejection defect state in the main scanning direction and is not necessarily required to be adjacent to the nozzle in the ejection defect state. For example, the density value of the nozzle at a position separated by 2 or 3 nozzles in the main scanning direction from the nozzle in the ejection defect state may be corrected. Furthermore, the density value of not one nozzle but each of two or more nozzles may be corrected for one side in the main scanning direction. Moreover, in a case where the density value of each of two or more nozzles is corrected for one side in the main scanning direction, the nozzles may include a nozzle the density value of which is reduced.

In the above embodiment, the CPU 111 as a processor executes the print control program 13 including the compensation coefficient determination program as a subprogram, thereby implementing various functions of the print control device 100. However, the configuration is not limited to the configuration using only one CPU 111 as illustrated in Fig. 5. A configuration using a plurality of processors such as a configuration using a plurality of CPUs can also be adopted. As the processor, in addition to the CPU, a micro processing unit (MPU), a graphics processing unit (GPU), a digital signal processor (DSP), or the like can also be adopted. Furthermore, a plurality of types of processors can be used in combination. For example, regarding the components illustrated in Fig. 11, some components and the remaining components may be realized by different processors. Moreover, a configuration including a field-programmable gate array (FPGA) or an application specific integrated circuit (ASIC) can also be adopted.

<10. Others>

In the above-described embodiment (including modifications), the inkjet printing apparatus 10 that performs color printing has been adopted. However, the present invention is not limited thereto, and an inkjet printing apparatus that performs monochrome printing may be adopted.

Furthermore, in the above-described embodiment (including modifications), the inkjet printing apparatus 10 using an aqueous ink is adopted. However, the present invention is not limited thereto, and for example, an inkjet printing apparatus using UV ink (ultraviolet curing ink) such as an inkjet printing apparatus for label printing may be adopted. In this case, an ultraviolet irradiation mechanism for curing the UV ink on the printing paper 5 by ultraviolet irradiation is provided inside the printing mechanism 201 (see Fig. 2) instead of the drying mechanism 206.

DESCRIPTION OF REFERENCE CHARACTERS

10:     INKJET PRINTING APPARATUS
40:     INLINE SCANNER
64:     SAMPLE IMAGE DATA
65:     NORMAL REGION DATA
66:     COMPARISON DATA
68:     EJECTION DEFECT DETECTION CHART
69:     COMPENSATION COEFFICIENT CALCULATION CHART
76:     COMPARISON REGION
80:     TENTATIVE DEFECTIVE NOZZLE
100:    PRINT CONTROL DEVICE
155:    COMPENSATION COEFFICIENT CALCULATION CHART DATA GENERATION PROCESSING UNIT
156:    CORRECTION COEFFICIENT CALCULATION UNIT
157:    PRINT DATA CORRECTION UNIT
200:    PRINTING MACHINE BODY
201:    PRINTING MECHANISM
205:    RECORDING UNIT
251:    INK EJECTION HEAD
510:    SHADING DATA GENERATION UNIT
520:    COMPENSATION COEFFICIENT CALCULATION UNIT

# EP 4 751 917 A1

521: EJECTION DEFECT NOZZLE DETECTION UNIT
522: SAMPLE IMAGE DATA EXTRACTION UNIT
523: DATA DELETION UNIT
524: COEFFICIENT DETERMINATION UNIT
530: SHADING DATA CORRECTION UNIT

**Claims**

1. A compensation coefficient determination method of determining a compensation coefficient to be applied to an ink amount compensation process that compensates for an amount of ink ejected to a print medium when a nozzle in an ejection defect state is present in a printing apparatus including a plurality of nozzles configured to eject ink to the print medium, the compensation coefficient determination method comprising:

   a region division step of dividing a predetermined region into a plurality of divided regions including K comparison regions associated with K provisional compensation coefficients different from each other in a direction orthogonal to a conveyance direction of the print medium, the K being an integer of 2 or more;
   a tentative defective nozzle setting step of setting, for each of the K comparison regions, a plurality of tentative defective nozzles that are virtually considered to be in an ejection defect state from among two or more corresponding nozzles;
   a compensation coefficient calculation chart data generation step of generating compensation coefficient calculation chart data representing a compensation coefficient calculation chart for determining the compensation coefficient by performing the ink amount compensation process on predetermined image data having a constant density in the direction orthogonal to the conveyance direction of the print medium while applying the K provisional compensation coefficients to the K comparison regions, respectively;
   an ejection defect detection chart printing step of printing an ejection defect detection chart for detecting a nozzle in an ejection defect state by ejecting ink from the plurality of nozzles;
   a compensation coefficient calculation chart printing step of printing the compensation coefficient calculation chart by ejecting ink from the plurality of nozzles based on the compensation coefficient calculation chart data;
   an ejection defect detection chart imaging step of imaging the ejection defect detection chart printed in the ejection defect detection chart printing step;
   a compensation coefficient calculation chart imaging step of imaging the compensation coefficient calculation chart printed in the compensation coefficient calculation chart printing step;
   an ejection defect nozzle detection step of detecting a nozzle in an ejection defect state based on first imaging data that is imaging data obtained in the ejection defect detection chart imaging step;
   a sample image data extraction step of extracting K pieces of sample image data corresponding to the K comparison regions from second imaging data that is imaging data obtained in the compensation coefficient calculation chart imaging step;
   a data deletion step of generating K pieces of comparison data by deleting data in a range depending on a position of a true defective nozzle that is a nozzle detected in the ejection defect nozzle detection step from the K pieces of sample image data; and
   a coefficient determination step of determining one of the K provisional compensation coefficients as the compensation coefficient based on the K pieces of comparison data.

2. The compensation coefficient determination method according to claim 1, wherein the plurality of divided regions includes a normal region not affected by the tentative defective nozzle in addition to the K comparison regions,

   in the sample image data extraction step, normal region data corresponding to the normal region is further extracted from the second imaging data, and
   in the coefficient determination step, the compensation coefficient is determined based on the K pieces of comparison data and the normal region data.

3. The compensation coefficient determination method according to claim 2, wherein in the coefficient determination step, an average value for each of the K pieces of comparison data and an average value for the normal region data are obtained, and a provisional compensation coefficient associated with a comparison region corresponding to comparison data from which an average value closest to a target value is obtained among the K pieces of comparison data is determined as the compensation coefficient, the target value being the average value for the normal region data.

4. The compensation coefficient determination method according to claim 3, wherein each of the K comparison regions corresponds to N tentative defective nozzles, the N being an integer of 2 or more,

each of the K pieces of sample image data includes N pieces of partial image data corresponding to the N tentative defective nozzles, and
in the data deletion step, for each of the K pieces of sample image data, partial image data corresponding to a region affected by the true defective nozzle is deleted from the N pieces of partial image data.

5. The compensation coefficient determination method according to claim 2, wherein each of the K comparison regions corresponds to N tentative defective nozzles, the N being an integer of 2 or more,

in the data deletion step, for each of the K pieces of sample image data, data of P positions affected by the true defective nozzle among positions of the N tentative defective nozzles is deleted, the P being an integer of 1 or more and (N - 1) or less, and
in the coefficient determination step, for each of the K pieces of comparison data, a peak average value that is an average value for data of (N - P) positions excluding the data of the P positions deleted in the data deletion step among data of the positions of the N tentative defective nozzles and an average value for the normal region data are obtained, and a provisional compensation coefficient associated with a comparison region corresponding to comparison data from which a peak average value closest to a target value is obtained among the K pieces of comparison data is determined as the compensation coefficient, the target value being the average value for the normal region data.

6. The compensation coefficient determination method according to claim 1, wherein, in the coefficient determination step, a provisional compensation coefficient associated with a comparison region corresponding to comparison data having a minimum difference between a maximum value and a minimum value among the K pieces of comparison data is determined as the compensation coefficient.

7. The compensation coefficient determination method according to claim 1, wherein the printing apparatus includes a plurality of print heads each including a part of the plurality of nozzles,

the K comparison regions are provided for each of the plurality of print heads,
the K provisional compensation coefficients associated with the K comparison regions are common among the plurality of print heads, and
in the sample image data extraction step, one piece of sample image data is extracted by extracting, from the second imaging data, data of a plurality of comparison regions associated with a same provisional compensation coefficient among the plurality of print heads.

8. The compensation coefficient determination method according to claim 1, wherein the compensation coefficient calculation chart includes a plurality of sheets for each color of ink.

9. The compensation coefficient determination method according to claim 8, wherein in the tentative defective nozzle setting step, for each of the K comparison regions, a nozzle different for each of the plurality of sheets is set as a tentative defective nozzle.

10. The compensation coefficient determination method according to claim 1, wherein the compensation coefficient calculation chart includes M density regions corresponding to M densities different from each other in the conveyance direction of the print medium, the M being an integer of 2 or more, and
in the coefficient determination step, the compensation coefficient is determined for each density.

11. A printing method using a printing apparatus including a plurality of nozzles that ejects ink to a print medium, the printing method comprising:

a shading data generation step of generating shading data to be used in a shading correction process that compensates for variation in an ejection amount of ink among the plurality of nozzles;
a shading data correction step of correcting the shading data by performing the ink amount compensation process on the shading data using a compensation coefficient determined by the compensation coefficient determination method according to any one of claims 1 to 10;
a print data generation step of generating print data by performing a rasterization process on submitted data;

a shading correction step of correcting the print data by performing the shading correction process on the print data using the shading data corrected in the shading data correction step;

a halftone process step of generating halftone image data by performing a halftone process on the print data corrected in the shading correction step; and

an ink ejection step of ejecting ink from the plurality of nozzles based on the halftone image data.

12. The printing method according to claim 11, wherein a nozzle adjacent to the true defective nozzle is defined as an adjacent nozzle, and when the compensation coefficient is represented by C that is a value of 0 or more and 1 or less, a value of a position corresponding to the true defective nozzle in the shading data before the shading data correction step is executed is represented by Vf, a value of a position corresponding to the adjacent nozzle in the shading data before the shading data correction step is executed is represented by Vn, and a value of a position corresponding to the adjacent nozzle in the shading data after the shading data correction step is executed is represented by V, V is represented by the following formula:

$$V = Vn + Vf \times C.$$

13. The printing method according to claim 12, wherein a value of a position corresponding to the true defective nozzle in the shading data after the shading data correction step is executed is 0.

14. A printing apparatus comprising: a plurality of nozzles configured to eject ink to a print medium; an imaging device configured to capture a print image; and a controller configured to control ejection of ink from the plurality of nozzles and imaging of the print image by the imaging device, and configured to perform, at a time of printing, an ink amount compensation process that compensates for an amount of ink ejected to the print medium when a nozzle in an ejection defect state is present,

wherein the controller executes:

a region division process of dividing a predetermined region into a plurality of divided regions including K comparison regions associated with K provisional compensation coefficients different from each other in a direction orthogonal to a conveyance direction of the print medium, the K being an integer of 2 or more;

a tentative defective nozzle setting process of setting, for each of the K comparison regions, a plurality of tentative defective nozzles that are virtually considered to be in an ejection defect state from among two or more corresponding nozzles;

a compensation coefficient calculation chart data generation process of generating compensation coefficient calculation chart data representing a compensation coefficient calculation chart for determining the compensation coefficient by performing the ink amount compensation process on predetermined image data having a constant density in the direction orthogonal to the conveyance direction of the print medium while applying the K provisional compensation coefficients to the K comparison regions, respectively;

an ejection defect detection chart printing process of controlling ejection of ink from the plurality of nozzles so as to print an ejection defect detection chart for detecting a nozzle in an ejection defect state;

a compensation coefficient calculation chart printing process of controlling ejection of ink from the plurality of nozzles based on the compensation coefficient calculation chart data so as to print the compensation coefficient calculation chart;

an ejection defect detection chart imaging process of causing the imaging device to image the ejection defect detection chart printed in the ejection defect detection chart printing step;

a compensation coefficient calculation chart imaging process of causing the imaging device to image the compensation coefficient calculation chart printed in the compensation coefficient calculation chart printing step;

an ejection defect nozzle detection process of detecting a nozzle in an ejection defect state based on first imaging data that is imaging data obtained in the ejection defect detection chart imaging step;

a sample image data extraction process of extracting K pieces of sample image data corresponding to the K comparison regions from second imaging data that is imaging data obtained in the compensation coefficient calculation chart imaging step;

a data deletion process of generating K pieces of comparison data by deleting data in a range depending on a position of a true defective nozzle that is a nozzle detected in the ejection defect nozzle detection process from the K pieces of sample image data; and

a coefficient determination process of determining one of the K provisional compensation coefficients as the compensation coefficient based on the K pieces of comparison data.

15. A compensation coefficient determination program that determines a compensation coefficient to be applied to an ink amount compensation process that compensates for an amount of ink ejected to a print medium when a nozzle in an ejection defect state is present in a printing apparatus including a plurality of nozzles configured to eject ink to the print medium and an imaging device configured to capture a print image, the compensation coefficient determination program causing a computer included in the printing apparatus to execute:

a region division step of dividing a predetermined region into a plurality of divided regions including K comparison regions associated with K provisional compensation coefficients different from each other in a direction orthogonal to a conveyance direction of the print medium, the K being an integer of 2 or more;

a tentative defective nozzle setting step of setting, for each of the K comparison regions, a plurality of tentative defective nozzles that are virtually considered to be in an ejection defect state from among two or more corresponding nozzles;

a compensation coefficient calculation chart data generation step of generating compensation coefficient calculation chart data representing a compensation coefficient calculation chart for determining the compensation coefficient by performing the ink amount compensation process on predetermined image data having a constant density in the direction orthogonal to the conveyance direction of the print medium while applying the K provisional compensation coefficients to the K comparison regions, respectively;

an ejection defect detection chart printing step of controlling ejection of ink from the plurality of nozzles so as to print an ejection defect detection chart for detecting a nozzle in an ejection defect state;

a compensation coefficient calculation chart printing step of controlling ejection of ink from the plurality of nozzles based on the compensation coefficient calculation chart data so as to print the compensation coefficient calculation chart;

an ejection defect detection chart imaging step of causing the imaging device to image the ejection defect detection chart printed in the ejection defect detection chart printing step;

a compensation coefficient calculation chart imaging step of causing the imaging device to image the compensation coefficient calculation chart printed in the compensation coefficient calculation chart printing step;

an ejection defect nozzle detection step of detecting a nozzle in an ejection defect state based on first imaging data that is imaging data obtained in the ejection defect detection chart imaging step;

a sample image data extraction step of extracting K pieces of sample image data corresponding to the K comparison regions from second imaging data that is imaging data obtained in the compensation coefficient calculation chart imaging step;

a data deletion step of generating K pieces of comparison data by deleting data in a range depending on a position of a true defective nozzle that is a nozzle detected in the ejection defect nozzle detection step from the K pieces of sample image data; and

a coefficient determination step of determining one of the K provisional compensation coefficients as the compensation coefficient based on the K pieces of comparison data.

16. A compensation coefficient method of determining a compensation coefficient to be applied to an ink amount compensation process that compensates for an amount of ink ejected to a print medium when a nozzle in an ejection defect state is present in a printing apparatus including a plurality of nozzles configured to eject ink to the print medium, the compensation coefficient determination method comprising:

an ejection defect detection chart printing step of printing an ejection defect detection chart for detecting a nozzle in an ejection defect state by ejecting ink from the plurality of nozzles;

a compensation coefficient calculation chart printing step of printing a compensation coefficient calculation chart for determining the compensation coefficient, in a state in which a predetermined region is divided, in a direction orthogonal to a conveyance direction of the print medium, into a plurality of divided regions including K comparison regions associated with K provisional compensation coefficients different from each other, by ejecting ink from the plurality of nozzles based on compensation coefficient calculation chart data obtained by performing the ink amount compensation process on predetermined image data having a constant density in the direction orthogonal to the conveyance direction of the print medium while applying the K provisional compensation coefficients to the K comparison regions, respectively, the K comparison regions each corresponding to a plurality of tentative defective nozzles that are virtually set to an ejection defect state, and the K being an integer of 2 or more;

an ejection defect detection chart imaging step of imaging the ejection defect detection chart printed in the ejection defect detection chart printing step;

a compensation coefficient calculation chart imaging step of imaging the compensation coefficient calculation chart printed in the compensation coefficient calculation chart printing step;

an ejection defect nozzle detection step of detecting a nozzle in an ejection defect state based on first imaging data that is imaging data obtained in the ejection defect detection chart imaging step;

a sample image data extraction step of extracting K pieces of sample image data corresponding to the K comparison regions from second imaging data that is imaging data obtained in the compensation coefficient calculation chart imaging step;

a data deletion step of generating K pieces of comparison data by deleting data in a range depending on a position of a true defective nozzle that is a nozzle detected in the ejection defect nozzle detection step from the K pieces of sample image data; and

a coefficient determination step of determining one of the K provisional compensation coefficients as the compensation coefficient based on the K pieces of comparison data.

17. A printing apparatus comprising: a plurality of nozzles configured to eject ink to a print medium; an imaging device configured to capture a print image; and a controller configured to control ejection of ink from the plurality of nozzles and imaging of the print image by the imaging device, and configured to perform, at a time of printing, an ink amount compensation process that compensates for an amount of ink ejected to the print medium when a nozzle in an ejection defect state is present,

wherein the controller executes:

an ejection defect detection chart printing process of controlling ejection of ink from the plurality of nozzles so as to print an ejection defect detection chart for detecting a nozzle in an ejection defect state;

a compensation coefficient calculation chart printing process of controlling ejection of ink from the plurality of nozzles so as to print a compensation coefficient calculation chart for determining a compensation coefficient, in a state in which a predetermined region is divided, in a direction orthogonal to a conveyance direction of the print medium, into a plurality of divided regions including K comparison regions associated with K provisional compensation coefficients different from each other, based on compensation coefficient calculation chart data obtained by performing the ink amount compensation process on predetermined image data having a constant density in the direction orthogonal to the conveyance direction of the print medium while applying the K provisional compensation coefficients to the K comparison regions, respectively, the K comparison regions each corresponding to a plurality of tentative defective nozzles that are virtually set to an ejection defect state, and the K being an integer of 2 or more;

an ejection defect detection chart imaging process of causing the imaging device to image the ejection defect detection chart printed in the ejection defect detection chart printing process;

a compensation coefficient calculation chart imaging process of causing the imaging device to image the compensation coefficient calculation chart printed in the compensation coefficient calculation chart printing process;

an ejection defect nozzle detection process of detecting a nozzle in an ejection defect state based on first imaging data that is imaging data obtained in the ejection defect detection chart imaging process;

a sample image data extraction process of extracting K pieces of sample image data corresponding to the K comparison regions from second imaging data that is imaging data obtained in the compensation coefficient calculation chart imaging process;

a data deletion process of generating K pieces of comparison data by deleting data in a range depending on a position of a true defective nozzle that is a nozzle detected in the ejection defect nozzle detection process from the K pieces of sample image data; and

a coefficient determination process of determining one of the K provisional compensation coefficients as the compensation coefficient based on the K pieces of comparison data.

18. A compensation coefficient determination program that determines a compensation coefficient to be applied to an ink amount compensation process that compensates for an amount of ink ejected to a print medium when a nozzle in an ejection defect state is present in a printing apparatus including a plurality of nozzles configured to eject ink to the print medium and an imaging device configured to capture a print image, the compensation coefficient determination program causing a computer included in the printing apparatus to execute:

an ejection defect detection chart printing step of controlling ejection of ink from the plurality of nozzles so as to print an ejection defect detection chart for detecting a nozzle in an ejection defect state;

a compensation coefficient calculation chart printing step of controlling ejection of ink from the plurality of nozzles so as to print a compensation coefficient calculation chart for determining the compensation coefficient, in a state in which a predetermined region is divided, in a direction orthogonal to a conveyance direction of the print medium, into a plurality of divided regions including K comparison regions associated with K provisional compensation coefficients different from each other, based on compensation coefficient calculation chart data obtained by performing the ink amount compensation process on predetermined image data having constant density in the direction orthogonal to the conveyance direction of the print medium while applying the K provisional compensation coefficients to the K comparison regions, respectively, the K comparison regions each corresponding to a plurality of tentative defective nozzles that are virtually set to an ejection defect state, and the K being an integer of 2 or more;

an ejection defect detection chart imaging step of causing the imaging device to image the ejection defect detection chart printed in the ejection defect detection chart printing step;

a compensation coefficient calculation chart imaging step of causing the imaging device to image the compensation coefficient calculation chart printed in the compensation coefficient calculation chart printing step;

an ejection defect nozzle detection step of detecting a nozzle in an ejection defect state based on first imaging data that is imaging data obtained in the ejection defect detection chart imaging step;

a sample image data extraction step of extracting K pieces of sample image data corresponding to the K comparison regions from second imaging data that is imaging data obtained in the compensation coefficient calculation chart imaging step;

a data deletion step of generating K pieces of comparison data by deleting data in a range depending on a position of a true defective nozzle that is a nozzle detected in the ejection defect nozzle detection step from the K pieces of sample image data; and

a coefficient determination step of determining one of the K provisional compensation coefficients as the compensation coefficient based on the K pieces of comparison data.

# Fig.1

INKJET PRINTING APPARATUS

--- 100

--- 200

PRINT CONTROL DEVICE

PRINTING MACHINE BODY

~10

~4

PRINT DATA GENERATION APPARATUS

~30

Fig.2

# Fig.3

CONVEYANCE DIRECTION OF PRINTING PAPER
(SUB-SCANNING DIRECTION)

251

205

25Y    25M    25C    25K

Fig.4

# Fig.5

- ~19
- ~100
- ~121
- ~110 MAIN BODY

AUXILIARY STORAGE DEVICE

PRINT CONTROL PROGRAM
- ~13

FIRST DISK INTERFACE UNIT
113

OPTICAL DISK DRIVE
122

SECOND DISK INTERFACE UNIT
114    115

111

CPU

123

DISPLAY UNIT

DISPLAY CONTROL UNIT

112

MEMORY

124 KEYBOARD

116

INPUT INTERFACE UNIT

125 MOUSE

117

COMMUNICATION INTERFACE UNIT

PRINTING MACHINE BODY

4

200

# Fig.6

71

| 50 | 50 | 50 | 50 | 50 |

7(1)  7(3)  7(5)

7(2)  7(4)

SHADING CORRECTION PROCESS

72

| 40 | 50 | 40 | 60 | 30 |

7(1)  7(3)  7(5)

7(2)  7(4)

# Fig.7

73

| 50 | 50 | 50 | 50 | 50 |

7(1)  7(3)  7(5)

7(2)  7(4)

INK AMOUNT COMPENSATION PROCESS

74

| 50 | 70 | 0 | 70 | 50 |

7(1)  7(3)  7(5)

7(2)  7(4)

# Fig.8

START

S10 | SHADING DATA GENERATION PROCESS

S20 | CORRECTION OF SHADING DATA

S30 | RASTERIZATION PROCESS

S40 | TRANSFER OF PRINT DATA

S50 | SHADING CORRECTION PROCESS
(CORRECTION OF PRINT DATA)

S60 | HALFTONE PROCESS

S70 | PRINTING BY RECORDING UNIT

END

# Fig.9

S10

( SHADING DATA GENERATION PROCESS )

S12 | PRINTING OF SHADING CHART |

S14 | IMAGING OF SHADING CHART |

S16 | CALCULATION OF DENSITY CORRECTION AMOUNT |

( RETURN )

# Fig.10

CONVEYANCE DIRECTION
OF PRINTING PAPER

75(6)
75(5)
75(4)
75(3)
75(2)
75(1)

# Fig.11

EP 4 751 917 A1

# Fig.12

```
                                        ┌─ 156
  CORRECTION COEFFICIENT CALCULATION UNIT

    ┌─510                          ┌─530
  ┌──────────────┐      61    ┌──────────────┐   57
  │ SHADING DATA │ ─────────> │ SHADING DATA │ ──────>
  │ GENERATION   │            │ CORRECTION   │
  │ UNIT         │            │ UNIT         │
  └──────────────┘            └──────────────┘
         ↑                           ↑
         │                         62│   ┌─520
         │                    ┌──────────────────┐
         │                    │ COMPENSATION     │
         │                    │ COEFFICIENT      │
         │                    │ CALCULATION UNIT │
         │                    └──────────────────┘
         │                        ↑        ↑
        56                       54       55
```

# Fig.13

```
                                          ┌──520
  COMPENSATION COEFFICIENT CALCULATION UNIT

         ┌─521
  54  ┌──────────────────┐  63
  ──> │ EJECTION DEFECT  │ ──────────────────┐
      │ NOZZLE DETECTION │                   │
      │ UNIT             │                   ↓
      └──────────────────┘          ┌──────────────┐ ┌─523
         ┌─522                      │ DATA         │
  55  ┌──────────────────┐  64      │ DELETION     │
  ──> │ SAMPLE IMAGE     │ ───────> │ UNIT         │
      │ DATA EXTRACTION  │          └──────────────┘
      │ UNIT             │               66│
      └──────────────────┘                 ↓     ┌─524
              65│                   ┌──────────────────────┐
               └──────────────────>│ COEFFICIENT          │
                                   │ DETERMINATION UNIT   │
                                   └──────────────────────┘
                                          62│
                                            ↓
```

38

Fig.14

# Fig.15

Fig.16

# Fig.17

START

S100 | REGION DIVISION

S110 | SETTING OF TENTATIVE DEFECTIVE NOZZLE

S120 | GENERATION OF COMPENSATION COEFFICIENT CALCULATION CHART DATA

S130 | PRINTING OF EJECTION DEFECT DETECTION CHART

S140 | PRINTING OF COMPENSATION COEFFICIENT CALCULATION CHART

S150 | IMAGING OF EJECTION DEFECT DETECTION CHART

S160 | IMAGING OF COMPENSATION COEFFICIENT CALCULATION CHART

S170 | DETECTION OF EJECTION DEFECT NOZZLE

S180 | EXTRACTION OF SAMPLE IMAGE DATA

S190 | DELETION OF DATA AFFECTED BY EJECTION DEFECT NOZZLE

S200 | DETERMINATION OF COMPENSATION COEFFICIENT TO BE ADOPTED

END

Fig.18

# Fig.19

69

690 (K)

690 (C)

690 (M)

690 (Y)

MAIN SCANNING DIRECTION

# Fig.20

# Fig.21

# Fig.22

# Fig.23

# Fig.24

68

680 (K)

680 (C)

680 (M)

680 (Y)

MAIN SCANNING DIRECTION

# Fig.25

68

681

682

MAIN SCANNING DIRECTION

# Fig.26

76(1)  76(2)  76(20)  76(21)  81

MAIN SCANNING DIRECTION

# Fig.27

541

542

MAIN SCANNING DIRECTION

# Fig.28

64

640(1)  640(2)  640(3)  640(4)

# Fig.29

# Fig.30

# Fig.31

# Fig.32

66

660(1)    660(2)    660(3)    660(4)

V1    V2    V3    V4

# Fig.33

66

660(1)    660(2)         660(4)

V1    V2         V4

## Fig.34

64

76

## Fig.35

64

82

76

## Fig.36

76

82

83    85    84

# Fig.37

87(1) 87(2) 87(3) 87(4)

LUMINANCE VALUE

86

POSITION OF NOZZLE

# Fig.38

90

LUMINANCE VALUE

88

89b

89a

POSITION OF NOZZLE

# Fig.39

```
                    ┌──────────────┐
                    │    START     │
                    └──────┬───────┘
                           ↓
S300  ┌────────────────────────────────────────────────────┐
      │   PRINTING OF EJECTION DEFECT DETECTION CHART        │
      └────────────────────────┬───────────────────────────┘
                               ↓
S310  ┌────────────────────────────────────────────────────┐
      │  PRINTING OF COMPENSATION COEFFICIENT CALCULATION CHART │
      └────────────────────────┬───────────────────────────┘
                               ↓
S320  ┌────────────────────────────────────────────────────┐
      │   IMAGING OF EJECTION DEFECT DETECTION CHART         │
      └────────────────────────┬───────────────────────────┘
                               ↓
S330  ┌────────────────────────────────────────────────────┐
      │  IMAGING OF COMPENSATION COEFFICIENT CALCULATION CHART │
      └────────────────────────┬───────────────────────────┘
                               ↓
S340  ┌────────────────────────────────────────────────────┐
      │      DETECTION OF EJECTION DEFECT NOZZLE             │
      └────────────────────────┬───────────────────────────┘
                               ↓
S350  ┌────────────────────────────────────────────────────┐
      │        EXTRACTION OF SAMPLE IMAGE DATA              │
      └────────────────────────┬───────────────────────────┘
                               ↓
S360  ┌────────────────────────────────────────────────────┐
      │  DELETION OF DATA AFFECTED BY EJECTION DEFECT NOZZLE │
      └────────────────────────┬───────────────────────────┘
                               ↓
S370  ┌────────────────────────────────────────────────────┐
      │ DETERMINATION OF COMPENSATION COEFFICIENT TO BE ADOPTED │
      └────────────────────────┬───────────────────────────┘
                               ↓
                    ┌──────────────┐
                    │     END      │
                    └──────────────┘
```

# Fig.40

# Fig.41

# Fig.42

## INTERNATIONAL SEARCH REPORT

| International application No. |
|---|
| **PCT/JP2024/019150** |

**A.    CLASSIFICATION OF SUBJECT MATTER**

***B41J 2/01***(2006.01)i; ***B41J 2/205***(2006.01)i
FI:    B41J2/01 205; B41J2/205

According to International Patent Classification (IPC) or to both national classification and IPC

**B.    FIELDS SEARCHED**

Minimum documentation searched (classification system followed by classification symbols)

B41J2/01; B41J2/205

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2012-45831 A (FUJIFILM CORPORATION) 08 March 2012 (2012-03-08) paragraphs [0082], [0183]-[0186], fig. 1-2, 16 | 1-18 |
| A | JP 2023-72466 A (KONICA MINOLTA, INC.) 24 May 2023 (2023-05-24) paragraph [0061], fig. 6 | 1-18 |
| A | US 2007/0030307 A1 (SAMSUNG ELECTRONICS CO., LTD.) 08 February 2007 (2007-02-08) entire text, all drawings | 1-18 |

☐ Further documents are listed in the continuation of Box C.        ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 June 2024** | **25 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/019150**

| Patent document cited in search report | | | Publication date (day/month/year) | Patent family member(s) | | | Publication date (day/month/year) |
|---|---|---|---|---|---|---|---|
| JP | 2012-45831 | A | 08 March 2012 | US | 2012/0050377 | A1 | |
| | | | | paragraphs [0111], [0202]-[0206], fig. 1-2, 16 | | | |
| | | | | EP | 2422984 | A1 | |
| | | | | CN | 102381026 | A | |
| JP | 2023-72466 | A | 24 May 2023 | US | 2023/0153558 | A1 | |
| | | | | paragraph [0082], fig. 8 | | | |
| US | 2007/0030307 | A1 | 08 February 2007 | EP | 1749666 | A2 | |
| | | | | entire text, all drawings | | | |
| | | | | KR | 10-0644709 | B1 | |

Form PCT/ISA/210 (patent family annex) (July 2022)

**EP 4 751 917 A1**

## REFERENCES CITED IN THE DESCRIPTION

**Patent documents cited in the description**

- JP 2021160200 A